# EUROPÄISCHE PATENTSCHRIFT

(11) **EP 1 651 039 B1**
(45) Veröffentlichungstag und Bekanntmachung des Hinweises auf die Patenterteilung: **04.01.2017**
(21) Anmeldenummer: 04763235.1
(22) Anmeldetag: 15.07.2004
(51) Int. Cl.: A01N 43/40, A01N 61/00, A01N 47/38, A01N 47/36, A01N 43/80, A01N 43/56, A01N 43/42, A01N 25/32, A01N 25/30, A01N 25/04, A01N 25/02

(54) **DIFLUFENICAN ENTHALTENDES ÖLSUSPENSIONSKONZENTRAT**
OIL SUSPENSION CONCENTRATE CONTAINING DIFLUFENICAN
CONCENTRE EN SUSPENSION HUILEUSE CONTENANT DU DIFLUFENICAN

(30) Priorität: 28.07.2003 DE 10334300
(43) Veröffentlichungstag der Anmeldung: 03.05.2006
(73) Patentinhaber: Bayer Intellectual Property GmbH, 40789 Monheim am Rhein (DE)
(72) Erfinder: HAASE, Detlev, 65929 Frankfurt (DE); KRAUSE, Hans-Peter, 65719 Hofheim (DE); SCHNABEL, Gerhard, 63820 Elsenfeld (DE); DECKWER, Roland, 65929 Frankfurt (DE)
(74) Vertreter: BIP Patents
(86) Internationale Anmeldenummer: PCT/EP2004/007836
(87) Internationale Veröffentlichungsnummer: WO 2005/011378

(56) Entgegenhaltungen:
- EP-A- 0 313 317
- EP-B- 0 713 646
- WO-A-03/028467
- US-A- 5 834 400
- US-A1- 2002 016 263
- US-B1- 6 479 432

## Beschreibung

Die vorliegende Erfindung betrifft das Gebiet der Pflanzenschutzmittelformulierungen. Insbesondere betrifft die Erfindung flüssige Formulierungen in Form von Ölsuspensionskonzentraten, welche den herbiziden Wirkstoff Diflufenican enthalten.

Wirkstoffe für den Pflanzenschutz werden im allgemeinen nicht in ihrer reinen Form eingesetzt. In Abhängigkeit von dem Anwendungsgebiet und der Anwendungsart, sowie von physikalischen, chemischen und biologischen Parametern wird der Wirkstoff in Mischung mit üblichen Hilfs- und Zusatzstoffen als Wirkstoffformulierung eingesetzt. Auch die Kombinationen mit weiteren Wirkstoffen zur Erweiterung des Wirkungsspektrum und/oder zum Schutz der Kulturpflanzen (z.B. durch Safener, Antidote) sind bekannt.

US 2002/0016263 A1 beschreibt flüssige Formulierungen enthaltend Derivate von Polycarbonsäuren und Wirkstoffe aus der Gruppe der ALS Inhibitoren. US 6,479,432 B1 beschreibt stabile flüssige Suspensionskonzentrate, welche darin suspendierte Wirkstoffe der Gruppe der Sulfonylharnstoffe enthalten sowie organische Lösungsmittel und nichtionische Emulgatoren. EP 0 313 317 A2 betrifft herbizide Suspensionskonzentrate ernthaltend bestimmte Sulfonamide sowie pflanzliche Öle und Tenside. US 5,834,400 offenbart emulgierbare Konzentrate enthaltend wasserunlösliche fluorierte agrochemische Wirkstoffe. WO 03/028467 A beschreibt herbizide synergistische Zubereitungen, die neben üblichen inerten Formulierhilfsstoffen bestimmte Wirkstoffmischungen enthalten. EP 0 713 646 B1 betrifft herbizide Mittel, die Amidosulfuron und Diflufenican in einer synergistisch wirksamen Menge enthalten.

Formulierungen von Wirkstoffen für den Pflanzenschutz sollten im allgemeinen eine hohe chemische und physikalische Stabilität, eine gute Applizierbarkeit und Anwenderfreundlichkeit und eine breite biologische Wirkung mit hoher Selektivität aufweisen.

Die Aufgabe der vorliegenden Erfindung bestand darin, eine verbesserte Pflanzenschutzmittelformulierung zur Verfügung zu stellen, welche vorteilhaft applizierbar ist und eine hohe biologische Effektivität und Kulturpflanzenverträglichkeit aufweist.

Diese Aufgabe wird gelöst durch das spezielle Ölsuspensionskonzentrat der vorliegenden Erfindung.

Die vorliegende Erfindung betrifft somit ein Ölsuspensionskonzentrat, enthaltend Verdickungs- und Thixotropiermittel sowie
a) den herbiziden Wirkstoff Diflufenican, aliphatischen
b) ein oder mehrere Lösungsmittel aus der Gruppe der aliphatischen Kohlenwasserstoffe, und
f) ein oder mehrere Sulfosuccinate aus der Gruppe der Mono- und Diester der Sulfobernsteinsäure.
Darüber hinaus kann das erfindungsgemäße Ölsuspensionskonzentrat gegebenenfalls noch weitere Komponenten enthalten, z.B.:
c) ein oder mehrere herbizide Wirkstoffe aus der Gruppe der ALS-Inhibitoren,
d) ein oder mehrere Safener,
e) einen oder mehrere von a), c) und d) verschiedene agrochemische Wirkstoffe, und/oder
g) übliche Hilfs- und Zusatzstoffe.

Unter dem Begriff Ölsuspensionskonzentrat (OD) im Sinne der vorliegenden Erfindung wird ein Suspensionskonzentrat auf Basis von Komponente b) (Kohlenwasserstoffe) verstanden. Dabei sind ein oder mehrere Wirkstoffe in den Kohlenwasserstoffen suspendiert, weitere Wirkstoffe können in den Kohlenwasserstoffen gelöst sein.

In dem erfindungsgemäßen Ölsuspensionskonzentrat liegt der herbizide Wirkstoff Diflufenican a) in suspendierter Form in den Kohlenwasserstoffen b) vor. Dies bedeutet, daß der Hauptanteil (in Gew.-%) an Diflufenican ungelöst in fein verteilter Form vorliegt, ein geringerer Teil an Diflufenican kann gelöst vorliegen. Vorzugsweise ist Diflufenican in den Kohlenwasserstoffen b) zu mehr als 80 Gew.-%, besonders bevorzugt zu mehr als 90 Gew.-% suspendiert, jeweils bezogen auf die Gesamtmenge an Diflufenican in dem erfindungsgemäßen Ölsuspensionskonzentrat.

Der als Komponente a) enthaltene herbizide Wirkstoff Diflufenican ist bekannt und kommerziell erhältlich (siehe z.B. "The Pesticide Manual" 12. Auflage (2000), The British Crop Protection Council, Seite 296 - 297). In dem erfindungsgemäßen Ölsuspensionskonzentrat ist Diflufenican im allgemeinen in einem Anteil von 1 bis 60 Gew.-%, vorzugsweise 2,5 bis 30 Gew.-% enthalten, dabei bezieht sich die Angabe "Gew.%" hier und in der gesamten Beschreibung, wenn nicht anders definiert, auf das relative Gewicht der jeweiligen Komponente bezogen auf das Gesamtgewicht der Formulierung.

Als Komponente b) sind ein oder mehrere aliphatische Kohlenwasserstoffe enthalten (siehe z.B. Römpp Lexikon Chemie, 10. Auflage, Band 3, Seite 2202 (1997), Georg Thieme Verlag Stuttgart / New York), bevorzugt solche, die bei Normalbedingungen flüssig sind. Die Kohlenwasserstoffe sind acyclische (aliphatische) Kohlenwasserstoffe

Beispiele für aliphatiche Kohlenwasserstoffe b) sind: lineare oder verzweigte, gesättigte oder ungesättigte Aliphaten, bevorzugt C₅-C₁₆-Aliphaten, z.B. Alkane, Alkene oder Alkine, wie Pentan, Hexan, Octan, 2-Methylbutan oder 2,2,4-Trimethylpentan.

Als Komponente b) können auch Gemische eines oder mehrerer aromatischer Kohlenwasserstoffe und/oder eines oder mehrerer cycloaliphatischer Kohlenwasserstoffe und eines oder mehrerer aliphatischer Kohlenwasserstoffe enthalten sein. Beispiele sind Gemische mehrerer aliphatischer Kohlenwasserstoffe, z.B. kommerziell erhältliche Lösungsmittel der EXXSOL^{®}D-Reihe, ISOPAR^{®}-Reihe oder BAYOL^{®}-Reihe z.B. Bayol^{®}82 (EXXONMOBIL CHEMICALS) oder der ISANE^{®}IP-Reihe oder HYDROSEAL^{®}G-Reihe (TOTALFINAELF), oder Gemische von aromatischen und aliphatischen Kohlenwasserstoffen, z.B. kommerziell erhältliche Lösungsmittel der SOLVESSO^{®}-Reihe z.B. Solvesso^{®}100, Solvesso^{®}150 oder Solvesso^{®}200 (EXXONMOBIL CHEMICALS), der SOLVAREX^{®}/SOLVARO^{®}-Reihe (TOTALFINAELF) oder der Caromax^{®}-Reihe z.B. Caromax^{®}28 (Petrochem Carless).

Bevorzugt als Komponente b) sind aliphatische Kohlenwasserstoffe, insbesondere gesättigte aliphatische Kohlenwasserstoffe wie C₅-C₁₆-Alkane, z.B. aus der Bayol^{®}-Reihe. Der Gesamtanteil an Kohlenwasserstoffen b) liegt in den erfindungsgemäßen Ölsuspensionskonzentraten im allgemeinen zwischen 5 und 95 Gew.-%, bevorzugt im Bereich von 10 bis 90 Gew.-%.

Als ALS-Inhibitoren c) kommen beispielsweise Verbindungen aus der Gruppe der Imidazolinone, Pyrimidinyloxy-pyridincarbonsäure-Derivate, Pyrimidyloxybenzoesäure-Derivate, oder der Sulfonamide in Frage, wie Triazolopyrimidinsulfonamide oder Sulfonylaminocarbonyltriazolinone, vorzugsweise Phenylsulfonylaminocarbonyltriazolinone, z.B. Flucarbazone oder Propoxycarbazone und/deren Salze, oder wie Sulfonylharnstoffe, vorzugsweise Phenylsulfonylharnstoffe.

Bevorzugte ALS-Inhibitoren entstammen aus der Reihe der Sulfonylharnstoffe, z.B. Pyrimidin- oder Triazinylaminocarbonyl-[benzol-, pyridin-, pyrazol-, thiophen- und (alkylsulfonyl)-alkylamino-]-sulfamide. Bevorzugt als Substituenten am Pyrimidinring oder Triazinring sind Alkoxy, Alkyl, Haloalkoxy, Haloalkyl, Halogen oder Dimethylamino, wobei alle Substituenten unabhängig voneinander kombinierbar sind. Bevorzugte Substituenten im Benzol-, Pyridin-, Pyrazol-, Thiophen- oder (Alkylsulfonyl)-alkylamino-Teil sind Alkyl, Alkoxy, Halogen wie F, Cl, Br oder J, Amino, Alkylamino, Dialkylamino, Acylamino wie Formylamino, Nitro, Alkoxycarbonyl, Aminocarbonyl, Alkylaminocarbonyl, Dialkylaminocarbonyl, Alkoxyaminocarbonyl, Halogenalkoxy, Halogenalkyl, Alkylcarbonyl, Alkoxyalkyl, Alkylsulfonylaminoalkyl, (Alkansulfonyl)alkylamino. Solche geeigneten Sulfonylharnstoffe sind beispielsweise
A1) Phenyl- und Benzylsulfonylharnstoffe und verwandte Verbindungen, z.B.
   1-(2-Chlorphenylsulfonyl)-3-(4-methoxy-6-methyl-1,3,5-triazin-2-yl)harnstoff (Chlorsulfuron),
   1-(2-Ethoxycarbonylphenylsulfonyl)-3-(4-chlor-6-methoxypyrimidin-2-yl)harnstoff (Chlorimuron-ethyl),
   1-(2-Methoxyphenylsulfonyl)-3-(4-methoxy-6-methyl-1,3,5-triazin-2-yl)harnstoff (Metsulfuron-methyl),
   1-(2-Chlorethoxyphenylsulfonyl)-3-(4-methoxy-6-methyl-1,3,5-triazin-2-yl)harn-stoff (Triasulfuron),
   1-(2-Methoxycarbonylphenylsulfonyl)-3-(4,6-dimethylpyrimidin-2-yl)harnstoff (Sulfumeturon-methyl),
   1-(2-Methoxycarbonylphenylsulfonyl)-3-(4-methoxy-6-methyl-1,3,5-triazin-2-yl)-3-methylharnstoff (Tribenuron-methyl),
   1-(2-Methoxycarbonylbenzylsulfonyl)-3-(4,6-dimethoxypyrimidin-2-yl)harnstoff (Bensulfuron-methyl),
   1-(2-Methoxycarbonylphenylsulfonyl)-3-(4,6-bis-(difluormethoxy)pyrimidin-2-yl)-harnstoff, (Primisulfuron-methyl),
   3-(4-Ethyl-6-methoxy-1,3,5-triazin-2-yl)-1-(2,3-dihydro-1,1-dioxo-2-methylbenzo-[b]thiophen-7-sulfonyl)harnstoff (EP-A 0 796 83),
   3-(4-Ethoxy-6-ethyl-1,3,5-triazin-2-yl)-1-(2,3-dihydro-1,1-dioxo-2-methylbenzo[b]-thiophen-7-sulfonyl)harnstoff (EP-A 0 079 683),
   3-(4-Methoxy-6-methyl-1,3,5-triazin-2-yl)-1-(2-methoxycarbonyl-5-jod-phenylsulfonyl)-harnstoff (lodosulfuron-methyl und dessen Salze wie das Natriumsalz, WO 92/13845),
   DPX-66037, Triflusulfuron-methyl (s. Brighton Crop Prot. Conf. - Weeds - 1995, S. 853),
   CGA-277476, (s. Brighton Crop Prot. Conf. - Weeds - 1995, S. 79),
   Methyl-2-[3-(4,6-dimethoxypyrimidin-2-yl)ureidosulfonyl]-4-methansulfon-amido-methyl-benzoat (Mesosulfuron-methyl und dessen Salze wie das Natriumsalz, WO 95/10507),
   N,N-Dimethyl-2-[3-(4,6-dimethoxypyrimidin-2-yl)ureidosulfonyl]-4-formylamino-benzamid (Foramsulfuron und dessen Salze wie das Natriumsalz, WO 95/01344);
A2) Thienylsulfonylharnstoffe, z.B.
   1-(2-Methoxycarbonylthiophen-3-yl)-3-(4-methoxy-6-methyl-1,3,5-triazin-2-yl)harnstoff (Thifensulfuron-methyl);
A3) Pyrazolylsulfonylharnstoffe, z.B.
   1-(4-Ethoxycarbonyl-1-methylpyrazol-5-yl-sulfonyl)-3-(4,6-dimethoxypyrimidin-2-yl)harnstoff (Pyrazosulfuron-methyl);
   Methyl-3-chlor-5-(4,6-dimethoxypyrimidin-2-ylcarbamoylsulfamoyl)-1-methyl-pyrazol-4-carboxylat (EP-A 0 282 613);
   5-(4,6-Dimethylpyrimidin-2-yl-carbamoylsulfamoyl)-1-(2-pyridyl)-pyrazol-4-carbonsäuremethylester (NC-330, s. Brighton Crop Prot. Conference 'Weeds' 1991, Vol. 1, S. 45 ff.),
   DPX-A8947, Azimsulfuron, (s. Brighton Crop Prot. Conf. 'Weeds' 1995, S. 65);
A4) Sulfondiamid-Derivate, z.B.
   3-(4,6-Dimethoxypyrimidin-2-yl)-1-(N-methyl-N-methylsulfonylaminosulfonyl)-harnstoff (Amidosulfuron) und dessen Strukturanaloge (EP-A 0 131 258 und Z. Pfl. Krankh. Pfl. Schutz, Sonderheft XII, 489-497 (1990));
A5) Pyridylsulfonylharnstoffe, z.B.
   1-(3-N,N-Dimethylaminocarbonylpyridin-2-ylsulfonyl)-3-(4,6-dimethoxypyrimidin-2-yl)harnstoff (Nicosulfuron),
   1-(3-Ethylsulfonylpyridin-2-ylsulfonyl)-3-(-(4,6-dimethoxypyrimidin-2-yl)harnstoff (Rimsulfuron),
   2-[3-(4,6-Dimethoxypyrimidin-2-yl)ureidosulfonyl]-6-trifluormethyl-3-pyridin-carbonsäuremethylester, Natriumsalz (DPX-KE 459, Flupyrsulfuron, s. Brighton Crop Prot. Conf. Weeds, 1995, S. 49),
   Pyridylsulfonylharnstoffe, wie sie z.B. in DE-A 40 00 503 und DE-A 40 30 577 beschrieben sind, vorzugsweise solche der Formel 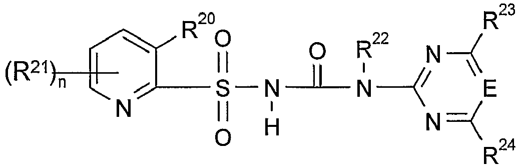 worin
      - E: CH oder N, vorzugsweise CH,
      - R²⁰: Jod oder NR²⁵R²⁶,
      - R²¹: Wasserstoff, Halogen, Cyano, (C₁-C₃)-Alkyl, (C₁-C₃)-Alkoxy, (C₁-C₃)-Halogenalkyl, (C₁-C₃)-Halogenalkoxy, (C₁-C₃)-Alkylthio, (C₁-C₃)-Alkoxy-(C₁-C₃)-alkyl, (C₁-C₃)-Alkoxy-carbonyl, Mono- oder Di-((C₁-C₃)-alkyl)-amino, (C₁-C₃)-Alkylsulfinyl oder -sulfonyl, SO₂-NR^{x}R^{y} oder CO-NR^{x}R^{y}, insbesondere Wasserstoff,
      - R^{x}, R^{y}: unabhängig voneinander Wasserstoff, (C₁-C₃)-Alkyl, (C₁-C₃)-Alkenyl, (C₁-C₃)-Alkinyl oder zusammen -(CH₂)₄-, -(CH₂)₅- oder -(CH₂)₂-O-(CH₂)₂-,
      - n: 0,1,2 oder 3, vorzugsweise 0 oder 1 ist,
      - R²²: Wasserstoff oder CH₃,
      - R²³: Halogen, (C₁-C₂)-Alkyl, (C₁-C₂)-Alkoxy, (C₁-C₂)-Halogenalkyl, insbesondere CF₃, (C₁-C₂)-Halogenalkoxy, vorzugsweise OCHF₂ oder OCH₂CF₃,
      - R²⁴: (C₁-C₂)-Alkyl, (C₁-C₂)-Halogenalkoxy, vorzugsweise OCHF₂, oder (C₁-C₂)-Alkoxy,
      - R²⁵: (C₁-C₄)-Alkyl,
      - R²⁶: (C₁-C₄)-Alkylsulfonyl oder
      - R²⁵ und R²⁶: gemeinsam eine Kette der Formel -(CH₂)₃SO₂- oder -(CH₂)₄SO₂-bedeuten, z.B. 3-(4,6-Dimethoxypyrimiden-2-yl)-1-(3-N-methylsulfonyl-N-methyl-aminopyridin-2-yl)-sulfonylharnstoff, oder deren Salze;
A6) Alkoxyphenoxysulfonylharnstoffe, wie sie z.B. in EP-A 0 342 569 beschrieben sind, vorzugsweise solche der Formel 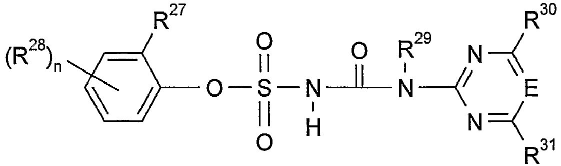 worin
   - E: CH oder N, vorzugsweise CH,
   - R²⁷: Ethoxy, Propoxy oder Isopropoxy,
   - R²⁸: Halogen, NO₂, CF₃, CN, (C₁-C₄)-Alkyl, (C₁-C₄)-Alkoxy, (C₁-C₄)-Alkylthio oder (C₁-C₃)-Alkoxy)-carbonyl, vorzugsweise in 6-Position am Phenylring,
   - n: 0, 1, 2 oder 3, vorzugsweise 0 oder 1,
   - R²⁹: Wasserstoff, (C₁-C₄)-Alkyl oder (C₃-C₄)-Alkenyl,
   - R³⁰, R³¹: unabhängig voneinander Halogen, (C₁-C₂)-Alkyl, (C₁-C₂)-Alkoxy, (C₁-C₂)-Halogenalkyl, (C₁-C₂)-Halogenalkoxy oder (C₁-C₂)-Alkoxy-(C₁-C₂)-alkyl, vorzugsweise OCH₃ oder CH₃, bedeuten, z.B. 3-(4,6-Dimethoxypyrimidin-2-yl)-1-(2-ethoxyphenoxy)-sulfonylharnstoff, oder deren Salze;
A7) Imidazolylsulfonylharnstoffe, z.B.
   MON 37500, Sulfosulfuron (s. Brighton Crop Prot. Conf. 'Weeds', 1995, S: 57), und andere verwandte Sulfonylharnstoff-Derivate und Mischungen daraus.

Typische Vertreter dieser Wirkstoffe sind unter anderem die nachfolgend aufgeführten Verbindungen: Amidosulfuron, Azimsulfuron, Bensulfuron-methyl, Chlorimuron-Ethyl, Chlorsulfuron, Cinosulfuron, Cyclosulfamuron, Ethametsulfuronmethyl, Ethoxysulfuron, Flazasulfuron, Flupyrsulfuron-Methyl-Natrium, Halosulfuron-Methyl, Imazosulfuron, Metsulfuron-Methyl, Nicosulfuron, Oxasulfuron, Primisulfuron-Methyl, Prosulfuron, Pyrazosulfuron-Ethyl, Rimsulfuron, Sulfometuron-Methyl, Sulfosulfuron, Thifensulfuron-Methyl, Triasulfuron, Tribenuron-Methyl, Triflusulfuron-Methyl, lodosulfuron-Methyl und dessen Natriumsalz (WO 92/13845), Mesosulfuron-Methyl und dessen Natriumsalz (Agrow Nr. 347, 3. März 2000, Seite 22 (PJB Publications Ltd. 2000)) und Foramsulfuron und dessen Natriumsalz (Agrow Nr. 338, 15. Oktober 1999, Seite 26 (PJB Publications Ltd. 1999)).

Die vorstehend aufgeführten Wirkstoffe sind z.B. bekannt aus "The Pesticide Manual", 12. Auflage (2000), The British Crop Protection Council oder den nach den einzelnen Wirkstoffen aufgeführten Literaturstellen.

Weitere geeignete ALS-Inhibitoren sind z.B.
B) Imidazolinone, z.B.
   2-(4-Isopropyl-4-methyl-5-oxo-2-imidazolin-2-yl)-5-methylbenzoesäure-methylester und 2-(4-Isopropyl-4-methyl-5-oxo-2-imidazolin-2-yl)-4-methylbenzoesäure (Imazamethabenz),
   5-Ethyl-2-(4-isopropyl-4-methyl-5-oxo-2-imidazolin-2-yl)-pyridin-3-carbonsäure (Imazethapyr),
   2-(4-Isopropyl-4-methyl-5-oxo-2-imidazolin-2-yl)-chinolin-3-carbonsäure (Imazaquin), 2-(4-Isopropyl-4-methyl-5-oxo-2-imidazolin-2-yl)-pyridin-3-carbonsäure (Imazapyr),
   5-Methyl-2-(4-isopropyl-4-methyl-5-oxo-2-imidazolin-2-yl)-pyridin-3-carbonsäure (Imazethamethapyr);
C) Triazolopyrimidinsulfonamide, z.B.
   N-(2,6-Difluorphenyl)-7-methyl-1,2,4-triazolo[1,5-c]pyrimidin-2-sulfonamid (Flumetsulam),
   N-(2,6-Dichlor-3-methylphenyl)-5,7-dimethoxy-1,2,4-triazolo[1,5-c]pyrimidin-2-sulfonamid,
   N-(2,6-Difluorphenyl)-7-fluor-5-methoxy-1,2,4-triazolo[1,5-c]pyrimidin-2-sulfonamid,
   N-(2,6-Dichlor-3-methylphenyl)-7-chlor-5-methoxy-1,2,4-triazolo[1,5-c]pyrimidin-2-sulfonamid,
   N-(2-Chlor-6-methoxycarbonyl)-5,7-dimethyl-1,2,4-triazolo[1,5-c]pyrimidin-2-sulfonamid (EP-A 0 343 752, US-A 4,988,812);
D) Pyrimidinyloxy-pyridincarbonsäure- bzw. Pyrimidinyloxybenzoesäure-Derivate, z.B.
   3-(4,6-Dimethoxypyrimidin-2-yl)-oxy-pyridin-2-carbonsäurebenzyl-ester (EP-A 0 249 707),
   3-(4,6-Dimethoxypyrimidin-2-yl)-oxy-pyridin-2-carbonsäuremethylester (EP-A 0 249 707),
   2,6-Bis[(4,6-dimethoxypyrimidin-2-yl)-oxy]-benzoesäure (EP-A 0 321 846),
   2,6-Bis[(4,6-dimethoxypyrimidin-2-yl)-oxy]-benzoesäure-1-(ethoxycarbonyl-oxyethyl)-ester (EP-A 0 472 113).

Als Sulfonamide kommen vorzugsweise Sulfonamide der allgemeinen Formel (I) und/oder deren Salze in Frage,

R^{α}-(A)ₘ-SO₂-NR^{β}-CO-(NR^{γ})ₙ - R^{δ} (I)

worin
- R^{α}: ein Kohlenwasserstoffrest, vorzugsweise ein Arylrest wie Phenyl, der unsubstituiert oder substituiert ist, oder ein heterocyclischer Rest, vorzugsweise ein Heteroarylrest wie Pyridyl, der unsubstituiert oder substituiert ist, und wobei die Reste inklusive Substituenten 1-30 C-Atome, vorzugsweise 1-20 C-Atome aufweisen, oder R^{α} eine elektronenziehende Gruppe wie ein Sulfonamidrest ist,
- R^{β}: ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- R^{γ}: ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- A: gleich CH₂, O oder NH, vorzugsweise O, ist,
- m: gleich Null oder 1,
- n: gleich Null oder 1, vorzugsweise gleich 1, und
- R^{δ}: ein heterocyclischer Rest wie ein Pyridylrest, ein Triazinylrest oder ein Triazolinonrest ist.

Beispiele für Sulfonamide der Formel (I) sind Sulfonylharnstoffe der Formel (II) und/oder deren Salze, 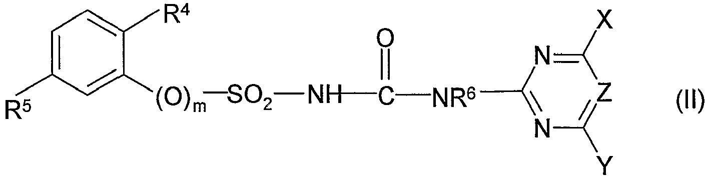 worin
- R⁴: C₁-C₄-Alkoxy, vorzugsweise C₂-C₄-Alkoxy, oder CO-R^{a} ist, worin R^{a} gleich OH, C₁-C₄-Alkoxy oder NR^{b}R^{c} ist, worin R^{b} und R^{c} unabhängig voneinander gleich oder verschieden H oder C₁-C₄-Alkyl sind,
- R⁵: Halogen, vorzugsweise lod, oder (A)ₙ-NR^{d}R^{e} ist, worin n gleich Null oder 1 ist, A eine Gruppe CR'R" ist, worin R' und R" unabhängig voneinander gleich oder verschieden H oder C₁-C₄-Alkyl sind, R^{d} gleich H oder C₁-C₄-Alkyl ist und R^{e} ein Acylrest wie Formyl oder C₁-C₄-Alkyl-Sulfonyl ist, und R⁵ für den Fall, daß R⁴ gleich C₁-C₄-Alkoxy, vorzugsweise C₂-C₄-Alkoxy, bedeutet auch H sein kann,
- R⁶: H oder C₁-C₄-Alkyl ist,
- m: gleich Null oder 1 ist,
- X und Y: unabhängig voneinander gleich oder verschieden C₁-C₆-Alkyl, C₁-C₆-Alkoxy oder C₁-C₆-Alkylthio sind, wobei jeder der drei genannten Reste unsubstituiert oder durch einen oder mehrere Reste aus der Gruppe Halogen, C₁-C₄-Alkoxy und C₁-C₄-Alkylthio substituiert ist, oder C₃-C₆-Cycloalkyl, C₂-C₆-Alkenyl, C₂-C₆-Alkynyl, C₃-C₆-Alkenyloxy oder C₃-C₆-Alkynyloxy sind, vorzugsweise C₁-C₄-Alkyl oder C₁-C₄-Alkoxy, und
- Z: gleich CH oder N ist.

Bevorzugt sind Sulfonylharnstoffe der allgemeinen Formel (II) und/oder deren Salze, worin
a) R⁴ gleich CO-(C₁-C₄-Alkoxy) ist, R⁵ gleich Halogen, vorzugsweise Jod ist, oder R⁵ gleich CH₂-NHR^{e} ist, worin R^{e} ein Acylrest, vorzugsweise C₁-C₄-Alkyl-Sulfonyl ist, und m gleich Null ist,
b) R⁴ gleich CO-N(C₁-C₄-Alkyl)₂, R⁵ gleich NHR^{e} ist, worin R^{e} ein Acylrest, vorzugsweise Formyl ist, und m gleich Null ist, oder
c) R⁴ gleich C₂-C₄-Alkoxy, R⁵ gleich H und m gleich 1 ist.

Besonders bevorzugte ALS-Inhibitoren sind: lodosulfuron-methyl (A1) und dessen Natriumsalz (A2), Mesosulfuron-methyl (A3) und dessen Natriumsalz (A4), Foramsulfuron (A5) und dessen Natriumsalz (A6), Flucarbazone (A7) und dessen Natriumsalz (A8), Propoxycarbazone (A9) und dessen Natriumsalz (A10), Ethoxysulfuron (A11) und dessen Natriumsalz (A12), Amidosulfuron (A13) und dessen Natriumsalz (A14).

Die vorstehend aufgeführten Wirkstoffe sind z.B. bekannt aus "The Pesticide Manual", 13. Auflage (2003), The British Crop Protection Council oder den nach den einzelnen Wirkstoffen aufgeführten Literaturstellen.

Soweit in den erfindungegemäßen Ölsuspensionskonzentraten als Komponente c) ALS-Inhibitoren enthalten sind, z.B. die vorstehend genannten Sulfonamide wie Sulfonamide der Formel (I) und/oder deren Salze, können diese in suspendierter Form und/oder in gelöster Form vorliegen.

Soweit in den erfindungsgemäßen Ölsuspensionskonzentraten herbizide Wirkstoffe aus der Gruppe der ALS-Inhibitoren enthalten sind, beträgt deren Gewichtsanteil im allgemeinen von 0,01 bis 50 Gew.-%, bevorzugt 0,1 bis 30 Gew.-%.

Soweit in dieser Beschreibung der Begriff Acylrest verwendet wird, bedeutet dieser den Rest einer organischen Säure, der formal durch Abspaltung einer OH-Gruppe aus der organischen Säure entsteht, z.B. der Rest einer Carbonsäure und Reste davon abgeleiteter Säuren wie der Thiocarbonsäure, gegebenenfalls N-substituierten Iminocarbonsäuren oder die Reste von Kohlensäuremonoestern, gegebenenfalls N-substituierter Carbaminsäuren, Sulfonsäuren, Sulfinsäuren, Phosphonsäuren, Phosphinsäuren.

Ein Acylrest ist bevorzugt Formyl oder Acyl aus der Gruppe CO-R^{z}, CS-R^{z}, CO-OR^{z}, CS-OR^{z}, CS-SR^{z}, SOR^{z} oder SO₂R^{z}, wobei R^{z} jeweils einen C₁-C₁₀-Kohlenwasserstoffrest wie C₁-C₁₀-Alkyl oder C₆-C₁₀-Aryl bedeutet, der unsubstituiert oder substituiert ist, z.B. durch einen oder mehrere Substituenten aus der Gruppe Halogen wie F, Cl, Br, I, Alkoxy, Haloalkoxy, Hydroxy, Amino, Nitro, Cyano oder Alkylthio, oder R^{z} bedeutet Aminocarbonyl oder Aminosulfonyl, wobei die beiden letztgenannten Reste unsubstituiert, N-monosubstituiert oder N,N-disubstituiert sind, z.B. durch Substituenten aus der Gruppe Alkyl oder Aryl.

Acyl bedeutet beispielsweise Formyl, Halogenalkylcarbonyl, Alkylcarbonyl wie (C₁-C₄)Alkylcarbonyl, Phenylcarbonyl, wobei der Phenylring substituiert sein kann, oder Alkyloxycarbonyl, wie (C₁-C₄) Alkyloxycarbonyl, Phenyloxycarbonyl, Benzyloxycarbonyl, Alkylsulfonyl, wie (C₁-C₄) Alkylsulfonyl, Alkylsulfinyl, wie C₁-C₄(Alkylsulfinyl), N-Alkyl-1-iminoalkyl, wie N-(C₁-C₄)-1-imino-(C₁-C₄)alkyl und andere Reste von organischen Säuren.

Ein Kohlenwasserstoffrest bedeutet ein geradkettiger, verzweigter oder cyclischer und gesättigter oder ungesättigter aliphatischer oder aromatischer Kohlenwasserstoffrest, z.B. Alkyl, Alkenyl, Alkinyl, Cycloalkyl, Cycloalkenyl oder Aryl. Ein Kohlenwasserstoffrest weist bevorzugt 1 bis 40 C-Atome, vorzugsweise 1 bis 30 C-Atome auf; besonders bevorzugt bedeutet ein Kohlenwasserstoffrest Alkyl, Alkenyl oder Alkinyl mit bis zu 12 C-Atomen oder Cycloalkyl mit 3, 4, 5, 6 oder 7 Ringatomen oder Phenyl.

Ein aromatischer Rest (Aryl) oder ein Aromat bedeutet ein mono-, bi- oder polycyclisches aromatisches System, beispielsweise Phenyl, Naphthyl, Tetrahydronaphthyl, Indenyl, Indanyl, Pentalenyl, Fluorenyl und ähnliches, vorzugsweise Phenyl.

Ein heterocyclischer Rest oder Ring (Heterocyclyl) kann gesättigt, ungesättigt oder heteroaromatisch und unsubstituiert oder substituiert sein; er enthält vorzugsweise ein oder mehrere Heteroatome im Ring, vorzugsweise aus der Gruppe N, O und S; vorzugsweise ist er ein aliphatischer Heterocyclylrest mit 3 bis 7 Ringatomen oder ein heteroaromatischer Rest mit 5 oder 6 Ringatomen und enthält 1, 2 oder 3 Heteroatome. Der heterocyclische Rest kann z.B. ein heteroaromatischer Rest oder Ring (Heteroaryl) sein, wie z.B. ein mono-, bi- oder polycyclisches aromatisches System, in dem mindestens 1 Ring ein oder mehrere Heteroatome enthält, beispielsweise Pyridyl, Pyrimidinyl, Pyridazinyl, Pyrazinyl, Triazinyl, Thienyl, Thiazolyl, Oxazolyl, Furyl, Pyrrolyl, Pyrazolyl und Imidazolyl, oder ist ein partiell oder vollständig hydrierter Rest wie Oxiranyl, Oxetanyl, Pyrrolidyl, Piperidyl, Piperazinyl, Triazolyl, Dioxolanyl, Morpholinyl, Tetrahydrofuryl. Bevorzugt sind Pyrimidinyl und Triazinyl. Als Substituenten für einen substituierten heterocyclischen Rest kommen die weiter unten genannten Substituenten in Frage, zusätzlich auch Oxo z.B. im Triazolinonrest. Die Oxogruppe kann auch an den Heteroringatomen, die in verschiedenen Oxidationsstufen existieren können, z.B. bei N und S, auftreten.

Substituierte Reste, wie substituierte Kohlenwasserstoffreste, z.B. substituiertes Alkyl, Alkenyl, Alkinyl, Aryl, Phenyl und Benzyl, oder substituiertes Heterocyclyl oder Heteroaryl, bedeuten beispielsweise einen vom unsubstituierten Grundkörper abgeleiteten substituierten Rest, wobei die Substituenten beispielsweise einen oder mehrere, vorzugsweise 1, 2 oder 3 Reste aus der Gruppe Halogen, Alkoxy, Haloalkoxy, Alkylthio, Hydroxy, Amino, Nitro, Carboxy, Cyano, Azido, Alkoxycarbonyl, Alkylcarbonyl, Formyl, Carbamoyl, Mono- und Dialkylaminocarbonyl, substituiertes Amino, wie Acylamino, Mono- und Dialkylamino, und Alkylsulfinyl, Haloalkylsulfinyl, Alkylsulfonyl, Haloalkylsulfonyl und, im Falle cyclischer Reste, auch Alkyl und Haloalkyl sowie den genannten gesättigten kohlenwasserstoffhaltigen Resten entsprechende ungesättigte aliphatische Reste, wie Alkenyl, Alkinyl, Alkenyloxy, Alkinyloxy etc. bedeuten. Bei Resten mit C-Atomen sind solche mit 1 bis 4 C-Atomen, insbesondere 1 oder 2 C-Atomen, bevorzugt. Bevorzugt sind in der Regel Substituenten aus der Gruppe Halogen, z.B. Fluor und Chlor, (C₁-C₄)Alkyl, vorzugsweise Methyl oder Ethyl, (C₁-C₄)Haloalkyl, vorzugsweise Trifluormethyl, (C₁-C₄)Alkoxy, vorzugsweise Methoxy oder Ethoxy, (C₁-C₄)Haloalkoxy, Nitro und Cyano. Besonders bevorzugt sind dabei die Substituenten Methyl, Methoxy und Chlor.

Gegebenenfalls substituiertes Phenyl ist vorzugsweise Phenyl, das unsubstituiert oder ein- oder mehrfach, vorzugsweise bis zu dreifach durch gleiche oder verschiedene Reste, vorzugsweise aus der Gruppe Halogen, (C₁-C₄)Alkyl, (C₁-C₄)Alkoxy, (C₁-C₄)Halogenalkyl, (C₁-C₄)Halogenalkoxy und Nitro substituiert ist, z.B. o-, m- und p-Tolyl, Dimethylphenyl, 2-, 3- und 4-Chlorphenyl, 2-, 3- und 4-Trifluor- und -Trichlorphenyl, 2,4-, 3,5-, 2,5- und 2,3-Dichlorphenyl, o-, m- und p-Methoxyphenyl.

Cycloalkyl bedeutet ein carbocyclisches, gesättigtes Ringsystem vorzugsweise mit 3-6 C-Atomen, z.B. Cyclopropyl, Cyclobutyl, Cyclopentyl oder Cyclohexyl.

Die kohlenstoffhaltigen Reste wie Alkyl, Alkoxy, Haloalkyl, Haloalkoxy, Alkylamino und Alkylthio sowie die entsprechenden ungesättigten und/oder substituierten Reste im Kohlenstoffgerüst jeweils geradkettig oder verzweigt sein. Wenn nicht speziell angegeben, sind bei diesen Resten die niederen Kohlenstoffgerüste, z.B. mit 1 bis 6 C-Atomen bzw. bei ungesättigten Gruppen mit 2 bis 6 C-Atomen, bevorzugt. Alkylreste, auch in den zusammengesetzten Bedeutungen wie Alkoxy, Haloalkyl usw., bedeuten z.B. Methyl, Ethyl, n- oder i-Propyl, n-, i-, t- oder 2-Butyl, Pentyle, Hexyle, wie n-Hexyl, i-Hexyl und 1,3-Dimethylbutyl, Heptyle, wie n-Heptyl, 1-Methylhexyl und 1,4-Dimethylpentyl; Alkenyl- und Alkinylreste haben die Bedeutung der den Alkylresten entsprechenden möglichen ungesättigten Reste; Alkenyl bedeutet z.B. Allyl, 1-Methylprop-2-en-1-yl, 2-Methyl-prop-2-en-1-yl, But-2-en-1-yl, But-3-en-1-yl, 1-Methyl-but-3-en-1-yl und 1-Methyl-but-2-en-1-yl; Alkinyl bedeutet z.B. Propargyl, But-2-in-1-yl, But-3-in-1-yl, 1-Methyl-but-3-in-1-yl.

Halogen bedeutet beispielsweise Fluor, Chlor, Brom oder lod. Haloalkyl, -alkenyl und -alkinyl bedeuten durch Halogen, vorzugsweise durch Fluor, Chlor und/oder Brom, insbesondere durch Fluor oder Chlor, teilweise oder vollständig substituiertes Alkyl, Alkenyl bzw. Alkinyl, z.B. CF₃, CHF₂, CH₂F, CF₃CF₂, CH₂FCHCl, CCl₃, CHCl₂, CH₂CH₂Cl; Haloalkoxy ist z.B. OCF₃, OCHF₂, OCH₂F, CF₃CF₂O, OCH₂CF₃ und OCH₂CH₂Cl; entsprechendes gilt für Haloalkenyl und andere durch Halogen substituierte Reste.

Unter den in den erfindungsgemäßen Ölsuspensionskonzentraten als Komponente c) enthaltenen ALS-Inhibitoren sind im Sinne der vorliegenden Erfindung neben den neutralen Verbindungen stets auch deren Salze mit anorganischen und/oder organischen Gegenionen zu verstehen. So können Sulfonamide z.B. Salze bilden, bei denen der Wasserstoff der -SO₂-NH-Grupp durch ein für die Landwirtschaft geeignetes Kation ersetzt ist. Diese Salze sind beispielsweise Metallsalze, insbesondere Alkalimetallsalze oder Erdalkalimetallsalze, insbesondere Natrium- und Kaliumsalze, oder auch Ammoniumsalze oder Salze mit organischen Aminen. Ebenso kann Salzbildung durch Anlagerung einer Säure an basischen Gruppen, wie z.B. Amino und Alkylamino, erfolgen. Geeignete Säuren hierfür sind starke anorganische und organische Säuren, beispielsweise HCl, HBr, H₂SO₄ oder HNO₃.

Als optionale Komponente d) können in den erfindungsgemäßen Ölsuspensionskonzentraten Safener enthalten sein, die geeignet sind, Schäden an der Kulturpflanze zu reduzieren oder zu vermeiden. Geeignete Safener sind z.B. aus WO-A-96/14747 und der dort zitierten Literatur bekannt.

Folgende Gruppen von Verbindungen sind beispielsweise als Safener geeignet:
1) Verbindungen vom Typ der Dichlorphenylpyrazolin-3-carbonsäure (S1), vorzugsweise Verbindungen wie 1-(2,4-Dichlorphenyl)-5-(ethoxycarbonyl)-5-methyl-2-pyrazolin-3-carbonsäureethylester (S1-1, Mefenpyr-diethyl, PM S. 781 - 782), und verwandte Verbindungen, wie sie in der WO 91/07874 beschrieben sind,
2) Derivate der Dichlorphenylpyrazolcarbonsäure, vorzugsweise Verbindungen wie 1-(2,4-Dichlorphenyl)-5-methyl-pyrazol-3-carbonsäureethylester (S1-2), 1-(2,4-Dichlorphenyl)-5-isopropyl-pyrazol-3-carbonsäureethylester (S1-3), 1-(2,4-Dichlorphenyl)-5-(1,1-dimethyl-ethyl)pyrazol-3-carbonsäureethyl-ester (S1-4), 1-(2,4-Dichlorphenyl)-5-phenyl-pyrazol-3-carbonsäureethylester (S1-5) und verwandte Verbindungen, wie sie in EP-A-333 131 und EP-A-269 806 beschrieben sind.
3) Verbindungen vom Typ der Triazolcarbonsäuren (S1), vorzugsweise Verbindungen wie Fenchlorazol, d.h. 1-(2,4-Dichlorphenyl)-5-trichlormethyl-(1H)-1,2,4-triazol-3-carbonsäureethylester (S1-6), und verwandte Verbindungen (siehe EP-A-174 562 und EP-A-346 620);
4) Verbindungen vom Typ der 5-Benzyl- oder 5-Phenyl-2-isoxazolin-3-carbonsäure, oder der 5,5-Diphenyl-2-isoxazolin-3-carbonsäure vorzugsweise Verbindungen wie 5-(2,4-Dichlorbenzyl)-2-isoxazolin-3-carbonsäureethylester (S1-7) oder 5-Phenyl-2-isoxazolin-3-carbonsäureethylester (S1-8) und verwandte Verbindungen, wie sie in WO 91/08202 beschrieben sind, bzw. der 5,5-Diphenyl-2-isoxazolin-carbonsäure und deren Ethylester (S1-9, Isoxadifen-ethyl) oder -n-Propylester (S1-10) oder der 5-(4-Fluorphenyl)-5-phenyl-2-isoxazolin-3-carbonsäureethylester (S1-11), wie sie in der Patentanmeldung (WO-A-95/07897) beschrieben sind.
5) Verbindungen vom Typ der 8-Chinolinoxyessigsäure (S2), vorzugsweise (5-Chlor-8-chinolinoxy)-essigsäure-(1-methyl-hex-1-yl)-ester (S2-1 Cloquintocet-mexyl, PM S. 263 - 264), (5-Chlor-8-chinolinoxy)-essigsäure-(1,3-dimethyl-but-1-yl)-ester (S2-2), (5-Chlor-8-chinolinoxy)-essigsäure-4-allyl-oxy-butylester (S2-3), (5-Chlor-8-chinolinoxy)-essigsäure-1-allyloxy-prop-2-ylester (S2-4), (5-Chlor-8-chinolinoxy)-essigsäureethylester (S2-5), (5-Chlor-8-chinolinoxy)-essigsäuremethylester (S2-6), (5-Chlor-8-chinolinoxy)-essigsäureallylester (S2-7), (5-Chlor-8-chinolinoxy)-essigsäure-2-(2-propyliden-iminoxy)-1-ethylester (S2-8), (5-Chlor-8-chinolinoxy)-essigsäure-2-oxo-prop-1-ylester (S2-9) und verwandte Verbindungen, wie sie in EP-A-86 750, EP-A-94 349 und EP-A-191 736 oder EP-A-0 492 366 beschrieben sind.
6) Verbindungen vom Typ der (5-Chlor-8-chinolinoxy)-malonsäure, vorzugsweise Verbindungen wie (5-Chlor-8-chinolinoxy)-malonsäure-diethylester, (5-Chlor-8-chinolinoxy)-malonsäurediallylester, (5-Chlor-8-chinolinoxy)-malonsäure-methyl-ethylester und verwandte Verbindungen, wie sie in EP-A-0 582 198 beschrieben sind.
7) Wirkstoffe vom Typ der Phenoxyessig- bzw. -propionsäurederivate bzw. der aromatischen Carbonsäuren, wie z.B. 2,4-Dichlorphenoxyessigsäure(ester) (2,4-D), 4-Chlor-2-methyl-phenoxy-propionester (Mecoprop), MCPA oder 3,6-Dichlor-2-methoxy-benzoesäure(ester) (Dicamba).
8) Wirkstoffe vom Typ der Pyrimidine, wie "Fenclorim" (PM, S. 512-511) (= 4,6-Dichlor-2-phenylpyrimidin),
9) Wirkstoffe vom Typ der Dichloracetamide, die häufig als Vorauflaufsafener (bodenwirksame Safener) angewendet werden, wie z.B.
"Dichlormid" (PM, S. 363-364) (= N,N-Diallyl-2,2-dichloracetamid), AR-29148" (= 3-Dichloracetyl-2,2,5-trimethyl-1,3-oxazolidon von der Firma Stauffer),
"Benoxacor" (PM, s. 102-103) (= 4-Dichloracetyl-3,4-dihydro-3-methyl-2H-1,4-benzoxazin).
APPG-1292" (= N-Allyl-N[(1,3-dioxolan-2-yl)-methyl]dichloracetamid von der Firma PPG Industries),
ADK-24" (= N-Allyl-N-[(allylaminocarbonyl)-methyl]-dichloracetamid von der Firma Sagro-Chem),
AAD-67" oder AMON 4660" (= 3-Dichloracetyl-1-oxa-3-aza-spiro[4,5]decan von der Firma Nitrokemia bzw. Monsanto),
"Diclonon" oder ABAS145138" oder ALAB145138" (= (= 3-Dichloracetyl-2,5,5-trimethyl-1,3-diazabiclyco[4.3.0]nonan von der Firma BASF) und
"Furilazol" oder AMON 13900" (siehe PM, 637-638) (= (RS)-3-Dichloracetyl-5-(2-furyl)-2,2-dimethyloxazolidon)
10) Wirkstoffe vom Typ der Dichloracetonderivate, wie z.B.
AMG 191" (CAS-Reg. Nr. 96420-72-3) (= 2-Dichlormethyl-2-methyl-1,3-dioxolan von der Firma Nitrokemia),
11) Wirkstoffe vom Typ der Oxyimino-Verbindungen, die als Saatbeizmittel bekannt sind, wie z.B.
"Oxabetrinil" (PM, S. 902-903) (= (Z)-1,3-Dioxolan-2-ylmethoxyimino(phenyl)acetonitril), das als Saatbeiz-Safener gegen Schäden von Metolachlor bekannt ist,
"Fluxofenim" (PM, S. 613-614) (= 1-(4-Chlorphenyl)-2,2,2-trifluor-1-ethanon-O-(1,3-dioxolan-2-ylmethyl)-oxim, das als Saatbeiz-Safener gegen Schäden von Metolachlor bekannt ist, und
"Cyometrinil" oder A-CGA-43089" (PM, S. 1304) (= (Z)-Cyanomethoxyimino (phenyl)acetonitril), das als Saatbeiz-Safener gegen Schäden von Metolachlor bekannt ist,
12) Wirkstoffe vom Typ der Thiazolcarbonsäureester, die als Saatbeizmittel bekannt sind, wie z.B.
"Flurazol" (PM, S. 590-591) (= 2-Chlor-4-trifluormethyl-1,3-thiazol-5-carbonsäurebenzylester), das als Saatbeiz-Safener gegen Schäden von Alachlor und Metolachlor bekannt ist,
13) Wirkstoffe vom Typ der Napthalindicarbonsäurederivate, die als Saatbeizmittel bekannt sind, wie z.B.
"Naphthalic anhydrid" (PM, S. 1342) (= 1,8-Naphthalindicarbonsäureanhydrid), das als Saatbeiz-Safener für Mais gegen Schäden von Thiocarbamatherbiziden bekannt ist,
14) Wirkstoffe vom Typ Chromanessigsäurederivatre, wie z.B.
ACL 304415" (CAS-Reg. Nr. 31541-57-8) (= 2-84-Carboxy-chroman-4-yl)-essigsäure von der Firma American Cyanamid),
15) Wirkstoffe, die neben einer herbiziden Wirkung gegen Schadpflanzen auch Safenerwirkung an Kulturpflanzen aufweisen, wie z.B.
"Dimepiperate" oder AMY-93" (PM, S. 404-405) (= Piperidin-1-thiocarbonsäure-S-1-methyl-1-phenylethylester),
"Daimuron" oder ASK 23" (PM, S. 330) (= 1-(1-Methyl-1-phenylethyl)-3-p-tolylharnstoff),
"Cumyluron" = AJC-940" (= 3-(2-Chlorphenylmethyl)-1-(1-methyl-1-phenylethyl)-harnstoff, siehe JP-A-60087254),
"Methoxyphenon" oder ANK 049" (= 3,3'-Dimethyl-4-methoxy-benzophenon),
"CSB" (= 1-Brom-4-(chlormethylsulfonyl)-benzol) (CAS-Reg. Nr. 54091-06-4 von Kumiai),
Verbindungen von Typ der Acylsulfamoylbenzoesäureamide, z.B. der nachfolgenden Formel (VIII), die z.B. bekannt sind aus WO 99/16744.

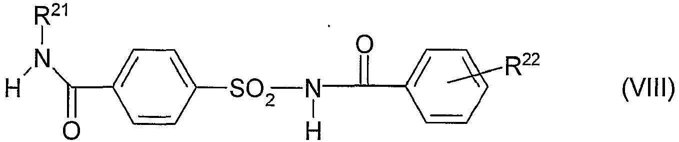

| Verbindung Nr. | R²¹ | R²² |
|---|---|---|
| S3-1 | Cyclo-Propyl | 2-OCH₃ |
| S3-2 | Cyclo-Propyl | 2-OCH₃, 5-Cl |
| S3-3 | Ethyl | 2-OCH₃ |
| S3-4 | iso-Propyl | 2-OCH₃, 5-Cl |
| S3-5 | iso-Propyl | 2-OCH₃ |

Bevorzugte Safener sind Mefenpyr, Fenchlorazol, Isoxadifen, Cloquintocet, und deren C₁-C₁₀-Alkylester, sowie die Safener (S3-1), (S3-5) und Benoxacor (S-4), insbesondere Mefenpyr-diethyl (S1-1), Fenchlorazol-ethyl (S1-6), Isoxadifen-ethyl (S1-9), Cloquintocet-mexyl (S2-1), (S3-1), (S3-5) und Benoxacor (S-4).

Soweit in den erfindungsgemäßen Ölsuspensionskonzentraten Safener d) enthalten sind, beträgt deren Gewichtsanteil im allgemeinen 0,1 bis 60 Gew.-%, insbesondere 0,5 bis 40 Gew.-%. Die Safener können in suspendierter Form und/oder in gelöster Form vorliegen.

Als optionale agrochemische Wirkstoffe e) können beispielsweise von den Komponenten a), c) und d) verschiedene agrochemische Wirkstoffe wie Herbizide, Fungizide, Insektizide, Pflanzenwachstumsregulatoren und dergleichen enthalten sein. Die agrochemischen Wirkstoffe e) können in dem Kohlenwasserstoff b) in suspendierter Form und/oder gelöster Form vorliegen.

Geeignete von den Komponenten a), c) und d) verschiedene Wirkstoffe, die in den erfindungsgemäßen Ölsuspensionskonzentraten als Komponente e) enthalten sein können, sind vorzugsweise herbizide Wirkstoffe, beispielsweise aus der Gruppe der Carbamate, Thiocarbamate, Halogenacetanilide, substituierte Phenoxy-, Naphthoxy- und Phenoxyphenoxycarbonsäure-Derivate sowie Heteroaryloxyphenoxyalkancarbonsäure-Derivate, wie Chinolyloxy-, Chinoxalyloxy-, Pyridyloxy-, Benzoxazolyloxy- und Benzthiazolyloxyphenoxyalkancarbonsäureester, Cyclohexandion-Derivate, Phosphor-haltige Herbizide, z.B. vom Glufosinate-Typ oder vom Glyphosate-Typ, sowie S-(N-Aryl-N-alkylcarbamoylmethyl)-dithiophosphorsäureester. Bevorzugt sind dabei Phenoxyphenoxy- und Heteroaryloxyphenoxycarbonsäureester und -salze wie Fenoxaprop sowie Herbizide wie Bentazon, Cyanazin, Atrazin, Diflufenican, Dicamba, 2,4-D oder Hydroxybenzonitrile wie Bromoxynil und loxynil und andere Blattherbizide, z.B.:
E) Herbizide vom Typ der Phenoxyphenoxy- und Heteroaryloxyphenoxycarbonsäure-Derivate, wie
   E1) Phenoxyphenoxy- und Benzyloxyphenoxy-carbonsäure-Derivate, z.B. 2-(4-(2,4-Dichlorphenoxy)-phenoxy)-propionsäuremethylester (Diclofop-methyl),
      2-(4-(4-Brom-2-chlorphenoxy)phenoxy)propionsäuremethylester (DE-A 26 01 548),
      2-(4-(4-Brom-2-fluorphenoxy)phenoxy)propionsäuremethylester (US-A 4,808,750),
      2-(4-(2-Chlor-4-trifluormethylphenoxy)phenoxy)propionsäuremethylester (DE-A 24 33 067),
      2-(4-(2-Fluor-4-trifluormethylphenoxy)phenoxy)propionsäuremethylester (US-A 4,808,750),
      2-(4-(2,4-Dichlorbenzyl)phenoxy)propionsäuremethylester (DE-A 24 17 487),

      4-(4-(4-Trifluormethylphenoxy)phenoxy)pent-2-en-säureethylester,

      2-(4-(4-Trifluormethylphenoxy)phenoxy)propionsäuremethylester (DE-A 24 33 067);
   E2) "Einkernige" Heteroaryloxyphenoxy-alkancarbonsäure-Derivate, z.B.
      2-(4-(3,5-Dichlorpyridyl-2-oxy)phenoxy)propionsäureethylester (EP-A 0 002 925),
      2-(4-(3,5-Dichlorpyridyl-2-oxy)phenoxy)propionsäurepropargylester (EP-A 0 003 114),
      2-(4-(3-Chlor-5-trifluormethyl-2-pyridyloxy)phenoxy)propionsäure-methylester (EP-A 0 003 890),
      2-(4-(3-Chlor-5-trifluormethyl-2-pyridyloxy)phenoxy)propionsäureethylester (EP-A 0 003 890),
      2-(4-(5-Chlor-3-fluor-2-pyridyloxy)phenoxy)propionsäurepropargylester (EP-A 0 191 736),
      2-(4-(5-Trifluormethyl-2-pyridyloxy)phenoxy)propionsäurebutylester (Fluazifop-butyl);
   E3) "Zweikernige" Heteroaryloxyphenoxy-alkancarbonsäure-Derivate, z.B.
      2-(4-(6-Chlor-2-chinoxalyloxy)phenoxy)propionsäuremethylester und -ethylester (Quizalofopmethyl und Quizalofopethyl),
      2-(4-(6-Fluor-2-chinoxalyloxy)phenoxy)propionsäuremethylester (s. J. Pest. Sci. Vol. 10,61 (1985)),
      2-(4-(6-Chlor-2-chinoxalyloxy)phenoxy)propionsäure-2-isopropylidenaminooxy-ethylester (Propaquizafop),
      2-(4-(6-Chlorbenzthiazol-2-yloxy)phenoxy)propionsäureethylester (DE-A 26 40 730),
      2-(4-(6-Chlorchinoxalyloxy)phenoxy)propionsäure-tetrahydro-2-furylmethylester (EP-A 0 323 727);
F) Chloracetanilide, z.B.
   N-Methoxymethyl-2,6-diethyl-chloracetanilid (Alachlor),
   N-(3-Methoxyprop-2-yl)-2-methyl-6-ethyl-chloracetanilid (Metolachlor),
   N-(3-Methyl-1,2,4-oxadiazol-5-yl-methyl)-chloressigsäure-2,6-dimethylanilid,
   N-(2,6-Dimethylphenyl)-N-(1-pyrazolylmethyl)-chloressigsäureamid (Metazachlor);
G) Thiocarbamate, z.B.
   S-Ethyl-N,N-dipropylthiocarbamat (EPTC),
   S-Ethyl-N,N-diisobutylthiocarbamat (Butylate);
H) Cyclohexandionoxime, z.B.
   3-(1-Allyloxyiminobutyl)-4-hydroxy-6,6-dimethyl-2-oxocyclohex-3-encarbon-säuremethylester, (Alloxydim),
   2-(1-Ethoxyiminobutyl)-5-(2-ethylthiopropyl)-3-hydroxy-cyclohex-2-en-1-on (Sethoxydim),
   2-(1-Ethoxyiminobutyl)-5-(2-phenylthiopropyl)-3-hydroxy-cyclohex-2-en-1-on (Cloproxydim),
   2-(1-(3-Chlorallyloxy)iminobutyl)-5-(2-ethylthiopropyl)-3-hyd roxy-cyclohex-2-en-1-on,
   2-(1-(3-Chlorallyloxy)iminopropyl)-5-(2-ethylthiopropyl)-3-hydroxy-cyclohex-2-en-1-on (Clethodim),
   2-(1-Ethoxyiminobutyl)-3-hydroxy-5-(thian-3-yl)-cyclohex-2-enon (Cycloxydim),
   2-(1-Ethoxyiminopropyl)-5-(2,4,6-trimethylphenyl)-3-hydroxy-cyclohex-2-en-1-on (Tralkoxydim);
I) Benzoylcyclohexandione, z.B.
   2-(2-Chlor-4-methylsulfonylbenzoyl)-cyclohexan-1,3-dion (SC-0051, EP-A 0 137 963, Sylcotrione), 2-(2-Nitrobenzoyl)-4,4-dimethyl-cyclohexan-1,3-dion (EP-A 0 274 634),
   2-(2-Nitro-4-methylsulfonylbenzoyl)-4,4-dimethylcyclohexan-1,3-dion (WO 91/13548, Mesotrione);
J) S-(N-Aryl-N-alkyl-carbamoylmethyl)-dithiophosphonsäureester, wie S-[N-(4-Chlorphenyl)-N-isopropyl-carbamoylmethyl]-O,O-dimethyl-dithiophosphat (Anilophos).
K) Alkylazine, z.B. wie beschrieben in WO-A 97/08156, WO-A-97/31904, DE-A-19826670, WO-A-98/15536, WO-A-8/15537, WO-A-98/15538, WO-A-98/15539 sowie auch DE-A-19828519, WO-A-98/34925, WO-A-98/42684, WO-A-99/18100, WO-A-99/19309, WO-A-99/37627 und WO-A-99/65882, vorzugsweise solche der Formel (K) 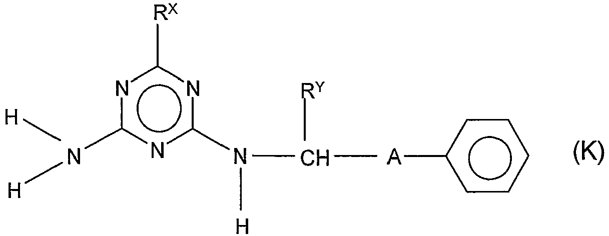 worin
   - R^{X}: (C₁-C₄)-Alkyl oder (C₁-C₄)-Haloalkyl;
   - R^{Y}: (C₁-C₄)-Alkyl, (C₃-C₆)-Cycloalkyl oder (C₃-C₆)-Cycloalkyl-(C₁-C₄)-Alkyl und
   - A: -CH₂-, -CH₂-CH₂-, -CH₂-CH₂-CH₂-, -O-, -CH₂-CH₂-O-, -CH₂-CH₂-CH₂-O-
   bedeuten, besonders bevorzugt solche der Formel K1-K7 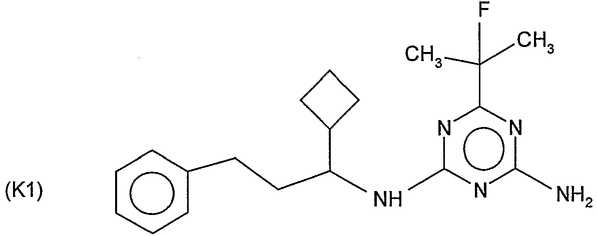 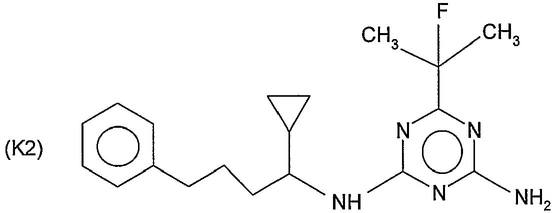 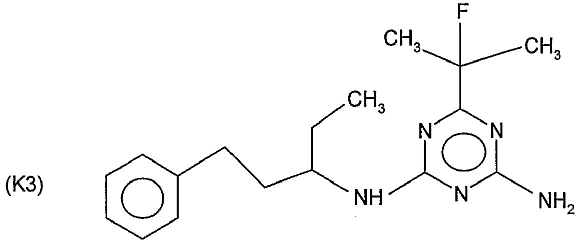 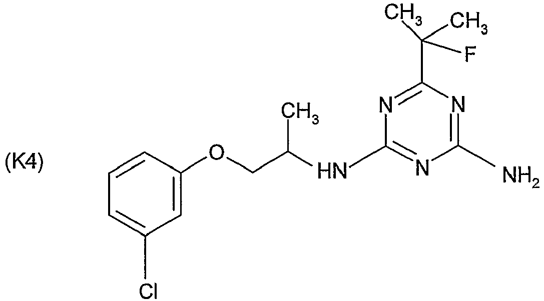 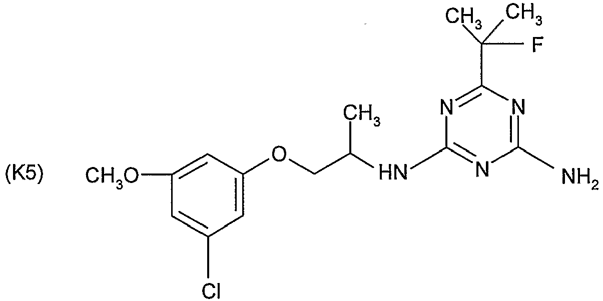 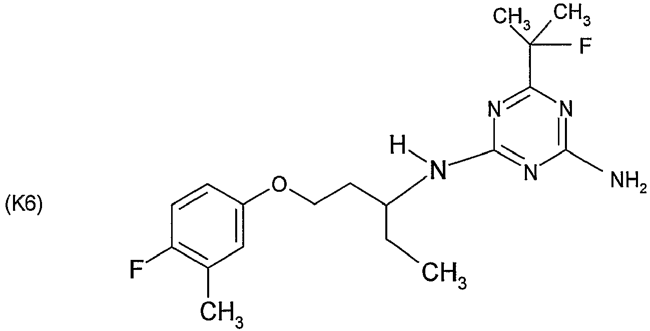 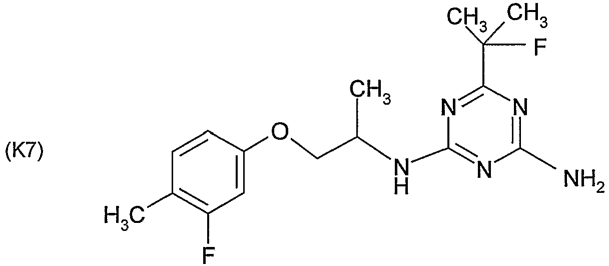
L) Phosphor-haltige Herbizide, z.B. vom Glufosinate-Typ wie Glufosinate im engeren Sinne, d. h. D,L-2-Amino-4-[hydroxy(methyl)phosphinyl]-butansäure, Glufosinate-monoammoniumsalz, L-Glufosinate, L- oder (2S)-2-Amino-4-[hydroxy(methyl)phosphinyl]-butansäure, L-Glufosinate-monoammoniumsalz oder Bialaphos (oder Bilanafos), d.h. L-2-Amino-4-[hydroxy(methyl)phosphinyl]-butanoyl-L-alanyl-L-alanin, insbesondere dessen Natriumsalz, oder vom Glyphosate-Typ wie Glyphosate, d. h. N-(Phosphonomethyl)-glycin, Glyphosate-monoisopropylammoniumsalz, Glyphosate-natriumsalz, oder Sulfosate, d. h. N-(Phosphonomethyl)-glycin-trimesiumsalz = N-(Phosphonomethyl)-glycin-trimethylsulfoxoniumsalz.

Die Herbizide der Gruppen E bis L sind beispielsweise aus den oben jeweils genannten Schriften und aus "The Pesticide Manual", 13. Auflage, 2003, The British Crop Protection Council, "Agricultural Chemicals Book II - Herbicides -", by W.T. Thompson, Thompson Publications, Fresno CA, USA 1990 und "Farm Chemicals Handbook'90", Meister Publishing Company, Willoughby OH, USA, 1990, bekannt.

Soweit in den erfindungsgemäßen Ölsuspensionskonzentraten agrochemische Wirkstoffe e) enthalten sind, beträgt deren Gewichtsanteil im allgemeinen 0,1 bis 50 Gew.-%, insbesondere 0,5 bis 25 Gew.-%.

Der in den erfindungsgemäßen Ölsuspensionskonzentraten enthaltene Gesamtwirkstoffgehalt (Summe der Komponenten a) + c) + d) + e)) liegt im allgemeinen zwischen 1 und 80 Gew.-%, insbesondere zwischen 3 und 60 Gew.-%.

Die in den erfindungsgemäßen Ölsuspensionskonzentraten enthaltenen Sulfosuccinate (Komponente f) sind Mono- oder Diester der Sulfobernsteinsäure, vorzugsweise solche der allgemeinen Formel (III)

R¹-(X₁)ₙ-O-CO-CH₂-CH(SO₃M)-CO-O-(X₂)ₘ-R² (III)

, worin
- R¹: H oder ein unsubstituierter oder substituierter C₁-C₃₀-Kohlenwasserstoffrest wie C₁-C₃₀-Alkyl oder C₇-C₃₀-Alkylaryl bedeutet,
- R²: H oder ein unsubstituierter oder substituierter C₁-C₃₀Kohlenwasserstoffrest wie C₁-C₃₀-Alkyl oder C₇-C₃₀Alkylaryl bedeutet, oder ein Kation ist, z.B. ein Metallkation wie ein Alkali- oder Erdalkalimetallkation, oder ein Ammoniumkation wie NH₄, Alkyl-, Alkylaryl- oder Poly(arylalkyl)phenyl-ammoniumkation,
- X¹, X²: unabhängig voneinander gleich oder verschieden eine Spacereinheit wie eine Polyethereinheit oder eine Polyestereinheit bedeuten,
- n,m: unabhängig voneinander gleich oder verschieden Null oder 1 sind, vorzugsweise Null sind, und
- M: ein Kation ist, z.B. ein Metallkation wie ein Alkali- oder Erdalkalimetallkation, oder ein Ammoniumkation wie NH₄, Alkyl-, Alkylaryl-oder Poly(arylalkyl)phenyl-ammoniumkation.

Bevorzugt sind Sulfosuccinate der Formel (III), worin R¹ und R² unabhängig voneinander gleich oder verschieden lineare, verzweigte oder cyclische, gesättigte oder ungesättigte C₁-C₂₀- vorzugsweise C₄-C₁₈-Alkylreste sind, wie Methyl-, Ethyl-, Butyl-, Hexyl-, Cyclohexyl-, Octyl wie 2-Ethylhexyl-, Decyl-, Tridecyl- oder Octadecyl-Reste, oder R¹ und R² sind C₇-C₂₀-Alkylarylreste, wie Nonylphenyl, 2,4,6-Tri-secbutylphenyl, 2,4,6-Tris-(1-phenylethyl)-phenyl, Alkylbenzyl oder ein Hydrozimtrest, X₁ und X₂ unabhängig voneinander gleich oder verschieden Polyethereinheiten sind, wie Polyethylenglykole -(C₂H₄O)ₚ- oder Polypropylenglykole -(C₃H₆O)ₚ- mit p=1 bis p=20, insbesondere p=1 bis p=12, oder Polyestereinheiten sind, wie Polyhydroxybuttersäure -(CH[CH₃]-CH₂-COO)_{q}- oder Polymilchsäure -(CH[CH₃]-COO)_{q}- mit q=1 bis q=15, insbesondere q=1 bis q=8,
n, m unabhängig voneinander gleich oder verschieden Null oder 1 sind, vorzugsweise Null sind, und M ein Kation ist, z.B. ein Metallkation, wie Alkali- oder Erdalkalimetallkation, oder ein Ammoniumkation, welches alkyl-substituiert sein kann.

Erfindungsgemäß enthaltene Sulfosuccinate sind, beispielsweise
a1) ein- oder zweifach mit linearen, cyclischen oder verzweigten aliphatischen, cycloaliphatischen und/oder aromatischen Alkoholen verestertes Sulfosuccinat, beispielsweise mit 1 bis 22 C-Atomen im Alkylrest, vorzugsweise ein- oder zweifach mit Methanol, Ethanol, (Iso)propanol, (Iso)butanol, (Iso)pentanol, (Iso)hexanol, Cyclohexanol, (Iso)heptanol, (Iso)octanol (insbesondere: Ethylhexanol), (Iso)nonanol, (Iso)decanol, (Iso)undecanol, (Iso)dodecanol oder (Iso)tridecanol verestertes Mono- oder Dialkalisulfosuccinat, insbesondere Mono- oder Dinatriumsulfosuccinat,
a2) ein- oder zweifach mit (Poly) Alkylenoxidaddukten von Alkoholen verestertes Sulfosuccinat, beispielsweise mit 1 bis 22 C-Atomen im Alkylrest und 1 bis 200, vorzugsweise 2 bis 200 Alkylenoxideinheiten im (Poly) Alkylenoxidanteil, vorzugsweise ein- oder zweifach mit Dodecyl/Tetradecyl-Alkohol +2-5 mol Ethylenoxid oder mit i-Tridecyl+3mol Ethylenoxid verestertes Mono- oder Dialkalisulfosuccinat, insbesondere Mono- oder Dinatriumsulfosuccinat,
a3) das Dialkali, vorzugsweise das Dinatriumsalz von einfach mit Aminen oder aminoterminierten (Poly) Alkylenoxidaddukten von Alkoholen, Aminen, Fettsäuren, Estern oder Amiden umgesetztem und nachfolgend sulfoniertem Maleinsäureanhydrid, beispielsweise mit 1 bis 22 C-Atomen im Alkylrest und 1 bis 200, vorzugsweise 2 bis 200 Alkylenoxy-Einheiten im (Poly) Alkylenoxidteil, vorzugsweise das Dinatriumsalz von einfach mit Kokosfettamin umgesetztem und nachfolgend sulfoniertem Maleinsäureanhydrid, und/oder
a4) das Dialkali, vorzugsweise das Dinatriumsalz von einfach mit Amiden oder (Poly) Alkylenoxidaddukten von Amiden umgesetztem und nachfolgend sulfoniertem Maleinsäureanhydrid, beispielsweise mit 1 bis 22 C-Atomen im Alkylrest und 1 bis 200, vorzugsweise 2 bis 200 Alykylenoxy-Einheiten im (Poly) Alkylenoxidteil, vorzugsweise das Dinatriumsalz von einfach mit Oleylamid+2 mol Ethylenoxid umgesetztem und nachfolgend sulfoniertem Maleinsäureanhydrid Beispiele kommerziell erhältlicher und im Rahmen der vorliegenden Erfindung bevorzugter Sulfosuccinate der Gruppen a1) bis a5) sind nachfolgend aufgeführt:
a1) Natrium-Dialkylsulfosuccinat, z.B. Natrium-Di(C₄-C₁₈)alkylsulfosuccinat wie Natrium-Diisooctylsulfosuccinat, vorzugsweise Natrium-Di(2-ethylhexyl)sulfosuccinat, kommerziell beispielsweise in Form der Aerosol^{®}-Marken (Cytec), der Agrilan^{®}- oder Lankropol^{®}-Marken (Akzo Nobel), der Empimin^{®}-Marken (Albright&Wilson), der Cropol^{®}-Marken (Croda), der Lutensit^{®}-Marken (BASF) der Triton^{®}-Marken (Union Carbide), der Geropon^{®}-Marken (Rhodia) oder der Imbirol^{®}-, Madeol^{®}- oder Polirol^{®}-Marken (Cesalpinia) erhältlich,
a2) Natrium- Alkoholpolyethylenglykolethersulfosuccinat, kommerziell beispielsweise in Form von Geropon^{®} ACR-Marken erhältlich,
a3) Dinatrium-Alkoholpolyethylenglykolethersemisulfosuccinat, kommerziell beispielsweise in Form der Aerosol^{®}-Marken (Cytec), der Marlinat^{®}- oder Sermul^{®}-Marken (Condea), der Empicol^{®}-Marken (Albright&Wilson), der Secosol^{®}-Marken (Stepan), der Geropon^{®}-Marken (Rhodia), der Disponil^{®}- oder Texapon^{®}-Marken (Cognis) oder der Rolpon^{®}-Marken (Cesalpinia) erhältlich, und
a5) Dinatrium-Fettsäureamidpolyethylenglykolethersemisulfosuccinat, kommerziell beispielsweise in Form der Elfanol^{®}- oder Lankropol^{®}-Marken (Akzo Nobel), der Rewoderm^{®}-, Rewocid^{®}- oder Rewopol^{®}-Marken (Rewo), der Emcol^{®}-Marken (Witco), der Standapol^{®}-Marken (Cognis) oder der Rolpon^{®}-Marken (Cesalpinia) erhältlich.

Kommerziell sind Sulfosuccinate zum Beispiel als AEROSOL^{®}- (CYTEC), AGRILAN^{®}-oder LANKROPOL^{®}- (AKZO NOBEL), EMPIMIN^{®}- (HUNTSMAN), CROPOL^{®}- (CRODA), LUTENSIT^{®}- (BASF), TRITON^{®}GR-REIHE (UNIONCARBIDE), IMBIROL^{®}-/MADEOL^{®}- /POLlROL^{®}- (CESALPINIA); GEROPON^{®}AR-Reihe oder GEROPON^{®}SDS (RHODIA) erhältlich.

Bevorzugte Sulfosuccinate sind z.B. die Natrium-, Kalium- und Ammoniumsalze von Di(alkyl)sulfosuccinaten, wobei die Alkylreste gleich oder verschieden 4 bis 16 Kohlenstoffatome enthalten und linear oder verzweigt sein können, z.B. Butyl-, Hexyl-, Octyl- wie 2-Ethylhexyl- oder Decyl-Reste. Besonders bevorzugt sind Alkali-di(octyl)-sulfosuccinate wie Natrium-di(2-ethylhexyl)sulfosuccinat.

Soweit in den erfindungsgemäßen Ölsuspensionskonzentraten Sulfosuccinate enthalten sind, beträgt deren Gewichtsanteil im allgemeinen 0,1 - 60 Gew.-%, insbesondere 1 - 35 Gew.-%.

Als übliche Hilfs- und Zusatzstoffe (Komponente g) können in den erfindungsgemäßen Ölsuspensionskonzentraten z.B. noch enthalten sein: Tenside wie Emulgatoren und Dispergatoren, Verdickungs- und Thixotropiermittel, Adjuvantien, Netz-, Anti-Drift-, Haft-, Penetrations-, Konservierungs- und Frostschutzmittel, Stabilisatoren, Antioxidantien, Lösungsvermittler, Füll-, Träger- und Farbstoffe, Entschäumer, Düngemittel, Verdunstungshemmer, sowie den pH-Wert und die Viskosität beeinflussende Mittel.

Als Emulgatoren und Dispergatoren kommen z.B. nichtionische Emulgatoren und Dispergatoren in Frage, z.B.:
1) polyalkoxylierte, vorzugsweise polyethoxylierte, gesättigte und ungesättigte aliphatische Alkohole,
   - mit 8 bis 24 C-Atomen im Alkylrest, der sich von den entsprechenden Fettsäuren oder aus petrochemischen Produkten ableitet, und
   - mit 1 bis 100, vorzugsweise 2 bis 50, Ethylenoxideinheiten (EO), wobei die freie Hydroxy-Gruppe gegebenenfalls alkoxyliert ist,
   - die z. B. kommerziell als Genapol^{®}X- und Genapol^{®}O-Reihe (Clariant), Crovol^{®}M-Reihe (Croda) oder Lutensol^{®}Reihe (BASF) erhältlich sind, oder daraus durch Veretherung erhältlich sind, z.B. Genapol^{®}X060 Methylether.
2) polyalkoxylierte, vorzugsweise polyethoxylierte Arylalkylphenole, wie z. B. 2,4,6-Tris-(1-phenylethyl)-phenol (Tristyrylphenol) mit einem mittleren Ethoxylierungsgrad zwischen 10 und 80, bevorzugt 16 bis 40, wie z. B. SOPROPHOR^{®}BSU (RHODIA) oder HOE S 3474 (CLARIANT),
3) polyalkoxylierte, vorzugsweise polyethoxylierte Alkylphenole mit einem oder mehreren Alkylresten, wie z. B. Nonylphenol oder Tri-sec-butylphenol, und einem Ethoxylierungsgrad zwischen 2 und 40, bevorzugt 4 bis 15, wie z. B. ARKOPAL^{®}N-Reihe oder SAPOGENAT^{®}T-Reihe (CLARIANT),
4) polyalkoxylierte, vorzugsweise polyethoxylierte Hydroxyfettsäuren oder Hydroxyfettsäuren enthaltene Glyceride, wie z. B. Ricinin bzw. Rizinusöl, mit einem Ethoxylierungsgrad zwischen 10 und 80, bevorzugt 25 bis 40, wie z. B. EMULSOGEN^{®}EL-Reihe (CLARIANT) oder AGNIQUE^{®}CSO-Reihe (COGNIS),
5) polyalkoxylierte, vorzugsweise polyethoxylierte Sorbitanester, wie z. B. Atplus^{®}309 F (UNIQEMA) oder Alkamuls^{®}-Reihe (Rhodia)
6) Di- und Tri-block-copolymere, z.B. aus Alkylenoxiden, z.B. aus Ethylen- und Propylenoxid mit mittleren Molmassen zwischen 200 und 10000, vorzugsweise 1000 bis 4000 g/mol, wobei der Massenanteil des polyethoxylierte Blocks zwischen 10 und 80% variiert, wie z. B. GENAPOL^{®}PF-Reihe (CLARIANT), PLURONIC^{®}-Reihe (BASF), oder SYNPERONIC^{®}PE-Reihe (UNIQEMA),

Bevorzugte nichtionische Emulgatoren und Dispergatoren sind z.B. polyethoxylierte Alkohole, polyethoxylierte Triglyceride, die Hydroxyfettsäuren enthalten und Polyethylenoxid-Polypropylenoxid-Block-Copolymere.

Der Gesamtanteil an nichtionischen Emulgatoren und Dispergatoren in den erfindungsgemäßen Ölsuspensionskonzentraten liegt im allgemeinen zwischen 0 und 40 Gew.%, vorzugsweise zwischen 1 und 30 Gew.-%. Werden nichtionische Emulgatoren und Dispergatoren, neben ihren emulgierenden/dispergierenden Eigenschaften, auch zur Erhöhung der biologischen Effektivität, z. B. als Penetrations- oder Haftmittel, eingesetzt, kann sich ihr Anteil in den erfindungsgemäßen Ölsuspensionskonzentraten auf bis zu 60 Gew.% erhöhen.

Es kommen auch ionische Emulgatoren und Dispergatoren in Frage, z.B.:
1) polyalkoxylierte, vorzugsweise polyethoxylierte Emulgatoren/Dispergatoren (vgl. Komponente e), die ionisch modifiziert sind, z. B. durch Umsetzung der endständigen freien Hydroxylfunktion des Polyethylenoxidblocks zu einem Sulfat- oder Phosphatester (z. B. als Alkali- und Erdalkalimetallsalze), wie z. B. Genapol^{®}LRO oder Dispergiermittel 3618 (Clariant), Emulphor^{®} (BASF) oder Crafol^{®}AP (Cognis),
2) Alkali- und Erdalkalimetallsalze von Alkylarylsulfonsäuren mit linearer oder verzweigter Alkylkette, wie Phenylsulfonat CA oder Phenylsulfonat CAL (Clariant), Atlox^{®} 3377BM (ICI), Empiphos^{®}TM-Reihe (Huntsman)
3) Polyelektrolyte, wie Ligninsulfonate, Kondensationsprodukte aus Naphthalinsulfonat und Formaldehyd, Polystyrolsulfonat oder sulfonierte ungesättigte oder aromatische Polymere (Polystyrole, Polybutadiene oder Polyterpene), wie Tamol^{®}-Reihe (BASF), Morwet^{®}D425 (Witco), Kraftsperse^{®}-Reihe (Westvaco), Borresperse^{®}-Reihe (Borregard).

Bevorzugte ionische Emulgatoren/Dispergatoren sind z.B. Salze von Alkylarylsulfonsäuren und Polyelektrolyte aus der Polykondensation von Naphthalinsulfonat und Formaldehyd.

Der Gesamtanteil an ionischen Emulgatoren und Dispergatoren in den erfindungsgemäßen Ölsuspensionskonzentraten liegt im allgemeinen zwischen 0 und 20 Gew.%, insbesondere zwischen 0 und 8 Gew.%.

Als Verdickungs- und Thixotropiermittel kommen z.B. in Frage:
1) modifizierte natürliche Silikate, wie chemisch modifizierte Bentonite, Hectorite, Attapulgite, Montmorillonite, Smektite oder andere Silikatmineralien, wie BENTONE^{®} (ELEMENTIS), ATTAGEL^{®} (ENGELHARD), AGSORB^{®} (OIL-DRI CORPORATION) oder HECTORITE^{®} (AKZO NOBEL)
2) synthetische Silikate, wie Silikate der SIPERNAT^{®}-, AEROSIL^{®}- oder DUROSIL^{®}-Reihe (DEGUSSA), der CAB-O-SIL^{®}-Reihe (CABOT) oder der VAN GEL-Reihe (R.T. VANDERBILT),
3) Verdicker auf Basis synthetischer Polymere, wie Verdicker der THIXIN^{®}- oder THIXATROL^{®}-Reihe (ELEMENTIS).
4) Verdicker auf Basis natürlicher Polymere und natürlicher Öle, z.B. aus der THIXIN^{®}- oder THIXATROL^{®}-Reihe (ELEMENTIS).

Bevorzugte Verdickungs- und Thixotropiermittel sind z.B. modifizierte Schichtsilikate und Verdicker auf Basis synthetischer Polymere.

Der Anteil an Verdickungs- und Thixotropiermitteln in den erfindungsgemäßen Ölsuspensionskonzentraten liegt im allgemeinen zwischen 0 und 5 Gew.%, insbesondere zwischen 0,2 und 4 Gew.%.

Als Adjuvantien eignen sich z.B. Fettsäureester, z.B. natürlichen Ursprungs, z.B. natürliche Öle wie tierische Öle oder Pflanzenöle, oder synthetischen Ursprungs, z.B. Edenor^{®}-Reihe z.B. Edenor^{®}MEPa oder Edenor^{®}MESU oder AGNIQUE^{®}ME-Reihe oder AGNIQUE^{®}AE-Reihe (COGNIS), SALIM^{®}ME-Reihe (SALIM), Radia^{®}-Reihe z.B. Radia^{®}30167 (ICI), Prilube^{®}-Reihe z.B. Prilube^{®}1530 (Petrofina), STEPAN^{®}C-Reihe (STEPAN) oder WITCONOL^{®}23-Reihe (WITCO). Die Fettsäureester sind bevorzugt Ester von C₁₀-C₂₂-, vorzugsweise C₁₂-C₂₀-Fettsäuren. Die C₁₀-C₂₂-Fettsäureester sind beispielsweise Ester ungesättigter oder gesättigter C₁₀-C₂₂-Fettsäuren, insbesondere mit gerader Kohlenstoffatomzahl, z.B. Erucasäure, Laurinsäure, Palmitinsäure und insbesondere C₁₈-Fettsäuren wie Stearinsäure, Ölsäure, Linolsäure oder Linolensäure.

Beispiele für Fettsäureester wie C₁₀-C₂₂-Fettsäure-Ester sind Glycerin- und Glykolester von Fettsäuren wie C₁₀-C₂₂-Fettsäuren oder deren Umesterungsprodukte, z.B. Alkyl-Fettsäureester wie C₁-C₂₀-Alkyl-C₁₀-C₂₂-Fettsäure-Ester, wie sie z.B. durch Umesterung der vorgenannten Glycerin- oder Glykol-Fettsäureester wie C₁₀-C₂₂-Fettsäure-Ester mit C₁-C₂₀-Alkoholen (z.B. Methanol, Ethanol, Propanol oder Butanol) erhalten werden können. Die Umesterung kann nach bekannten Methoden erfolgen, wie sie z.B. beschrieben sind im Römpp Chemie Lexikon, 9. Auflage, Band 2, Seite 1343, Thieme Verlag Stuttgart.

Als Alkyl-Fettsäureester wie C₁-C₂₀-Alkyl-C₁₀-C₂₂-Fettsäure-Ester bevorzugt sind Methylester, Ethylester, Propylester, Butylester, 2-ethyl-hexylester und Dodecylester. Als Glykol- und Glycerin-Fettsäureester wie C₁₀-C₂₂-Fettsäure-Ester bevorzugt sind die einheitlichen oder gemischten Glykolester und Glycerinester von C₁₀-C₂₂-Fettsäuren, insbesondere solcher Fettsäuren mit gerader Anzahl an Kohlenstoffatomen, z.B. Erucasäure, Laurinsäure, Palmitinsäure und insbesondere C₁₈-Fettsäuren wie Stearinsäure, Ölsäure, Linolsäure oder Linolensäure.

Tierische Öle b) sind allgemein bekannt und kommerziell erhältlich. Unter dem Begriff tierische Öle im Sinne der vorliegenden Erfindung werden z.B. Öle tierischen Ursprungs verstanden wie Waltranöl, Lebertranöl, Moschusöl oder Nerzöl.

Pflanzenöle b) sind allgemein bekannt und kommerziell erhältlich. Unter dem Begriff Pflanzenöle im Sinne der vorliegenden Erfindung werden z.B. Öle aus ölliefernden Pflanzenarten wie Sojaöl, Rapsöl, Maiskeimöl, Sonnenblumenöl, Baumwollsaatöl, Leinöl, Kokosöl, Palmöl, Distelöl, Walnussöl, Erdnussöl, Olivenöl oder Rhizinusöl, insbesondere Rapsöl verstanden, wobei unter den Pflanzenölen auch deren Umesterungsprodukte verstanden werden, z.B. Alkylester wie Rapsölmethylester oder Rapsölethylester.

Die Pflanzenöle sind bevorzugt Ester von C₁₀-C₂₂-, vorzugsweise C₁₂-C₂₀-Fettsäuren. Die C₁₀-C₂₂-Fettsäureester sind beispielsweise Ester ungesättigter oder gesättigter C₁₀-C₂₂-Fettsäuren, insbesondere mit gerader Kohlenstoffatomzahl, z.B. Erucasäure, Laurinsäure, Palmitinsäure und insbesondere C₁₈-Fettsäuren wie Stearinsäure, Ölsäure, Linolsäure oder Linolensäure.

Beispiele für Pflanzenöle sind C₁₀-C₂₂-Fettsäure-Ester von Glycerin oder Glykol mit den C₁₀-C₂₂-Fettsäuren, oder C₁-C₂₀-Alkyl-C₁₀-C₂₂-Fettsäure-Ester, wie sie z.B. durch Umesterung der vorgenannten Glycerin- oder Glykol-C₁₀-C₂₂-Fettsäure-Ester mit C₁-C₂₀-Alkoholen (z.B. Methanol, Ethanol, Propanol oder Butanol) erhalten werden können. Die Umesterung kann nach bekannten Methoden erfolgen, wie sie z.B. beschrieben sind im Römpp Chemie Lexikon, 9. Auflage, Band 2, Seite 1343, Thieme Verlag Stuttgart.

Die Pflanzenöle können in den erfindungsgemäßen Ölsuspensionskonzentraten z.B. in Form kommerziell erhältlicher Pflanzenöle, insbesondere Rapsöle wie Rapsölmethylester, z.B. Phytorob®B (Novance, Frankreich), Edenor® MESU und Agnique®ME-Reihe (Cognis, Deutschland) Radia^{®}-Reihe (ICI), Prilube^{®}-Reihe (Petrofina) oder Biodiesel oder in Form kommerziell erhältlicher pflanzenölhaltiger Formulierungszusatzstoffe, insbesondere solcher auf Basis von Rapsölen wie Rapsölmethylester, z.B. Hasten® (Victorian Chemical Company, Australien, nachfolgend Hasten genannt, Hauptbestandteil: Rapsölethylester), Actirob®B (Novance, Frankreich, nachfolgend ActirobB genannt, Hauptbestandteil: Rapsölmethylester), Rako-Binol® (Bayer AG, Deutschland, nachfolgend Rako-Binol genannt, Hauptbestandteil: Rapsöl), Renol® (Stefes, Deutschland, nachfolgend Renol genannt, Pflanzenölbestandteil: Rapsölmethylester) oder Stefes Mero® (Stefes, Deutschland, nachfolgend Mero genannt, Hauptbestandteil: Rapsölmethylester) enthalten sein.

Beispiele für synthetische Fettsäureester sind z.B. solche die sich von Fettsäuren mit ungerader Kohlenstoffatomanzahl ableiten, wie C₁₁-C₂₁-Fettsäureester.

Der Anteil an Adjuvantien wie Fettsäureestern in den erfindungsgemäßen Ölsuspensionskonzentraten liegt im allgemeinen zwischen 0 und 20 Gew.-%, bevorzugt zwischen 0,5 und 15 Gew.-%.

Bevorzugt sind erfindungsgemäße Ölsuspensionskonzentrate, enthaltend:
a) 1 bis 60 Gew.-% Diflufenican,
b) 5 bis 90 Gew.-% eines oder mehrerer Kohlenwasserstoff, enthaltend ein oder mehrere aliphatische Kohlenwasserstoffe,
c) 0 bis 30 Gew.-%, vorzugsweise 0,01 bis 30 Gew.-%, eines oder mehrerer herbizider Wirkstoffe aus der Gruppe der ALS-Inhibitoren, vorzugsweise der Sulfonamide,
d) 0 bis 40 Gew-%, vorzugsweise 0,1 bis 40 Gew.-%, eines oder mehrerer Safener,
e) 0 bis 25 Gew.-% eines oder mehrerer von a), c) und d) verschiedene agrochemische Wirkstoffe,
f) bis 35 Gew.-%, vorzugsweise 0,1 bis 35 Gew.-%, eines oder mehrerer Sulfosuccinat, enthaltend ein oder mehrere Sulfosuccinate aus der Gruppe der Mono- und Diester der Sulfobernsteinsäure,
g) 0 bis 60 Gew.-%, vorzugsweise 1 bis 60 Gew.-%, sonstiger Hilfs- und Zusatzstoffe, insbesondere 0 bis 30 Gew.-% eines oder mehrerer nichtionischer Emulgatoren und Dispergatoren, 0 bis 8 Gew.-% eines oder mehrerer ionischer Emulgatoren und Dispergatoren, bis 4 Gew.-% eines oder mehrerer Verdickungs- und Thixotriopiermittel, und 0 - 20 Gew.-% Adjuvantien wie Fettsäureester.

In einer bevorzugten Ausführungsform enthält das erfindungsgemäße Ölsuspensionskonzentrat
a) 1 bis 30 Gew.-% Diflufenican,
b) 5 bis 90 Gew.-% eines oder mehrerer aliphatischer Kohlenwasserstoffe, vorzugsweise C₅-C₁₆-Alkane,
c) 0,01 bis 30 Gew.-% ein oder mehrere herbizide Wirkstoffe der Formel (I) und/oder deren Salze, vorzugsweise A1, A2, A3, A4, A5, A6, A7, A8, A9, A10, A11, A12, A13 und/oder A14,
d) 0,1 bis 20 Gew.-% einen Safener aus der Gruppe S1-1, S1-9 und S2-1,
e) 0 bis 25 Gew.-% eines oder mehrerer von a), c) und d) verschiedene agrochemische Wirkstoffe,
f) 0,1 bis 30 Gew.-% eines oder mehrerer Sulfosuccinate enthaltend ein oder mehrere Sulfosuccinate aus der Gruppe der Mono- und Diester der Sulfobernsteinsäure, vorzugsweise Di(C₁-C₂₂)alkyl-Sulfosuccinate,
g) 0,5 bis 50 Gew.-% sonstiger Hilfs- und Zusatzstoffe, insbesondere 0 bis 30 Gew.-% eines oder mehrerer nichtionischer Emulgatoren und Dispergatoren,
h) 0 bis 8 Gew.-% eines oder mehrerer ionischer Emulgatoren und Dispergatoren, bis 4 Gew.-% eines oder mehrerer Verdickungs- und Thixotriopiermittel, und 0,5 - 15 Gew.-% Adjuvantien wie Fettsäureester.

Als besonders bevorzugte Beispiele seien erfindungsgemäße Ölsuspensionskonzentrate genannt, welche die nachfolgend genannten Komponenten enthalten, ohne dass dadurch eine Einschränkung erfolgen soll. Dabei bedeutet, Bayol ein Lösungsmittel aus der Bayol^{®}-Reihe, vorzugsweise Bayol^{®}82.

Diflufenican + Bayol, Diflufenican + Bayol + A1, Diflufenican + Bayol + A2,
Diflufenican + Bayol + A3, Diflufenican + Bayol + A4, Diflufenican + Bayol + A5,
Diflufenican + Bayol + A6, Diflufenican + Bayol + A7, Diflufenican + Bayol + A8,
Diflufenican + Bayol + A9, Diflufenican + Bayol + A10, Diflufenican + Bayol + A11,
Diflufenican + Bayol + A12, Diflufenican + Bayol + A13, Diflufenican + Bayol + A14,
Diflufenican + Bayol + Rapsölmethylester;
Diflufenican + Bayol + A1 + S1-1, Diflufenican + Bayol + A2 + S1-1, Diflufenican + Bayol + A3 + S1-1, Diflufenican + Bayol + A4 + S1-1, Diflufenican + Bayol + A5 + S1-1, Diflufenican + Bayol + A6 + S1-1, Diflufenican + Bayol + A7 + S1-1, Diflufenican + Bayol + A8 + S1-1, Diflufenican + Bayol + A9 + S1-1, Diflufenican + Bayol + A10 + S1-1, Diflufenican + Bayol + A11 + S1-1, Diflufenican + Bayol + A12 + S1-1, Diflufenican + Bayol +A13 + S1-1, Diflufenican + Bayol + A14 + S1-1,
Diflufenican + Bayol + A1 + S1-9, Diflufenican + Bayol + A2 + S1-9, Diflufenican + Bayol + A3 + S1-9, Diflufenican + Bayol + A4 + S1-9, Diflufenican + Bayol + A5 + S1-9, Diflufenican + Bayol + A6 + S1-9, Diflufenican + Bayol + A7 + S1-9, Diflufenican + Bayol + A7 + S1-9, Diflufenican + Bayol + A8 + S1-9, Diflufenican + Bayol + A9 + S1-9, Diflufenican + Bayol + A10 + S1-9, Diflufenican + Bayol + A11 + S1-9, Diflufenican + Bayol + A12 + S1-9, Diflufenican + Bayol + A13 + S1-9, Diflufenican + Bayol + A14 + S1-9,
Diflufenican + Bayol + A1 + S2-1, Diflufenican + Bayol + A2 + S2-1, Diflufenican + Bayol + A3 + S2-1, Diflufenican + Bayol + A4 + S2-1, Diflufenican + Bayol + A5 + S2-1, Diflufenican + Bayol + A6 + S2-1, Diflufenican + Bayol + A7 + S2-1, Diflufenican + Bayol + A8 + S2-1, Diflufenican + Bayol + A9 + S2-1, Diflufenican + Bayol + A10 + S2-1, Diflufenican + Bayol + A11 + S2-1, Diflufenican + Bayol + A12 + S2-1, Diflufenican + Bayol + A13 + S2-1, Diflufenican + Bayol + A14 + S2-1;
Diflufenican + Bayol + A1 + Natrium-di(2-ethylhexyl)sulfosuccinat,
Diflufenican + Bayol + A2 + Natrium-di(2-ethylhexyl)sulfosuccinat,
Diflufenican + Bayol + A3 + Natrium-di(2-ethylhexyl)sulfosuccinat,
Diflufenican + Bayol + A4 + Natrium-di(2-ethylhexyl)sulfosuccinat,
Diflufenican + Bayol + A5 + Natrium-di(2-ethylhexyl)sulfosuccinat,
Diflufenican + Bayol + A6 + Natrium-di(2-ethylhexyl)sulfosuccinat,
Diflufenican + Bayol + A7 + Natrium-di(2-ethylhexyl)sulfosuccinat,
Diflufenican + Bayol + A8 + Natrium-di(2-ethylhexyl)sulfosuccinat,
Diflufenican + Bayol + A9 + Natrium-di(2-ethylhexyl)sulfosuccinat,
Diflufenican + Bayol + A10 + Natrium-di(2-ethylhexyl)sulfosuccinat,
Diflufenican + Bayol + A11 + Natrium-di(2-ethylhexyl)sulfosuccinat,
Diflufenican + Bayol + A12 + Natrium-di(2-ethylhexyl)sulfosuccinat,
Diflufenican + Bayol + A13 + Natrium-di(2-ethylhexyl)sulfosuccinat,
Diflufenican + Bayol + A14 + Natrium-di(2-ethylhexyl)sulfosuccinat;
Diflufenican + Bayol + A1 + S1-1 + Rapsölmethylester, Diflufenican + Bayol + A2 + S1-1 + Rapsölmethylester, Diflufenican + Bayol + A3 + S1-1 + Rapsölmethylester,
Diflufenican + Bayol + A4 + S1-1 Rapsölmethylester, Diflufenican + Bayol + A5 + S1-1 Rapsölmethylester, Diflufenican + Bayol + A6 + S1-1 Rapsölmethylester, Diflufenican + Bayol + A7 + S1-1 Rapsölmethylester, Diflufenican + Bayol + A8 + S1-1 Rapsölmethylester, Diflufenican + Bayol + A9 + S1-1 Rapsölmethylester, Diflufenican + Bayol + A10 + S1-1 Rapsölmethylester, Diflufenican + Bayol + A11 + S1-1 Rapsölmethylester, Diflufenican + Bayol + A12 + S1-1 Rapsölmethylester, Diflufenican + Bayol + A13 + S1-1 Rapsölmethylester, Diflufenican + Bayol + A14 + S1-1 Rapsölmethylester,
Diflufenican + Bayol + A1 + S1-9 + Rapsölmethylester, Diflufenican + Bayol + A2 + S1-9 + Rapsölmethylester, Diflufenican + Bayol + A3 + S1-9 + Rapsölmethylester, Diflufenican + Bayol + A4 + S1-9 + Rapsölmethylester, Diflufenican + Bayol + A5 + S1-9 Rapsölmethylester, Diflufenican + Bayol + A6 + S1-9 + Rapsölmethylester, Diflufenican + Bayol + A7 + S1-9 + Rapsölmethylester, Diflufenican + Bayol + A9 + S1-9 + Rapsölmethylester, Diflufenican + Bayol + A8 + S1-9 + Rapsölmethylester, Diflufenican + Bayol + A10 + S1-9 + Rapsölmethylester, Diflufenican + Bayol + A11 + S1-9 + Rapsölmethylester, Diflufenican + Bayol + A12 + S1-9 + Rapsölmethylester, Diflufenican + Bayol + A13 + S1-9 + Rapsölmethylester, Diflufenican + Bayol + A14 + S1-9 + Rapsölmethylester,
Diflufenican + Bayol + A1 + S2-1 + Rapsölmethylester, Diflufenican + Bayol + A2 + S2-1 + Rapsölmethylester, Diflufenican + Bayol + A3 + S2-1 + Rapsölmethylester, Diflufenican + Bayol + A4 + S2-1 + Rapsölmethylester, Diflufenican + Bayol + A5 + S2-1 + Rapsölmethylester, Diflufenican + Bayol + A6 + S2-1 + Rapsölmethylester, Diflufenican + Bayol + A7 + S2-1 + Rapsölmethylester, Diflufenican + Bayol + A8 + S2-1 + Rapsölmethylester, Diflufenican + Bayol + A9 + S2-1 + Rapsölmethylester, Diflufenican + Bayol + A10 + S2-1 + Rapsölmethylester, Diflufenican + Bayol + A11 + S2-1 + Rapsölmethylester, Diflufenican + Bayol + A12 + S2-1 + Rapsölmethylester, Diflufenican + Bayol + A13 + S2-1 + Rapsölmethylester, Diflufenican + Bayol + A14 + S2-1 + Rapsölmethylester;
Diflufenican + Bayol + A1 + S1-1 + Natrium-di(2-ethylhexyl)sulfosuccinat,
Diflufenican + Bayol + A2 + S1-1 + Natrium-di(2-ethylhexyl)sulfosuccinat,
Diflufenican + Bayol + A3 + S1-1 + Natrium-di(2-ethylhexyl)sulfosuccinat,
Diflufenican + Bayol + A4 + S1-1 + Natrium-di(2-ethylhexyl)sulfosuccinat,
Diflufenican + Bayol + A5 + S1-1 + Natrium-di(2-ethylhexyl)sulfosuccinat,
Diflufenican + Bayol + A6 + S1-1 + Natrium-di(2-ethylhexyl)sulfosuccinat,
Diflufenican + Bayol + A7 + S1-1 + Natrium-di(2-ethylhexyl)sulfosuccinat,
Diflufenican + Bayol + A8 + S1-1 + Natrium-di(2-ethylhexyl)sulfosuccinat,
Diflufenican + Bayol + A9 + S1-1 + Natrium-di(2-ethylhexyl)sulfosuccinat,
Diflufenican + Bayol + A10 + S1-1 + Natrium-di(2-ethylhexyl)sulfosuccinat,
Diflufenican + Bayol + A11 + S1-1 + Natrium-di(2-ethylhexyl)sulfosuccinat,
Diflufenican + Bayol + A12 + S1-1 + Natrium-di(2-ethylhexyl)sulfosuccinat,
Diflufenican + Bayol + A13 + S1-1 + Natrium-di(2-ethylhexyl)sulfosuccinat,
Diflufenican + Bayol + A14 + S1-1 + Natrium-di(2-ethylhexyl)sulfosuccinat,
Diflufenican + Bayol + A1 + S1-9 + Natrium-di(2-ethylhexyl)sulfosuccinat,
Diflufenican + Bayol + A2 + S1-9 + Natrium-di(2-ethylhexyl)sulfosuccinat,
Diflufenican + Bayol + A3 + S1-9 + Natrium-di(2-ethylhexyl)sulfosuccinat,
Diflufenican + Bayol + A4 + S1-9 + Natrium-di(2-ethylhexyl)sulfosuccinat,
Diflufenican + Bayol + A5 + S1-9 + Natrium-di(2-ethylhexyl)sulfosuccinat,
Diflufenican + Bayol + A6 + S1-9 + Natrium-di(2-ethylhexyl)sulfosuccinat,
Diflufenican + Bayol + A7 + S1-9 + Natrium-di(2-ethylhexyl)sulfosuccinat,
Diflufenican + Bayol + A8 + S1-9 + Natrium-di(2-ethylhexyl)sulfosuccinat,
Diflufenican + Bayol + A9 + S1-9 + Natrium-di(2-ethylhexyl)sulfosuccinat,
Diflufenican + Bayol + A10 + S1-9 + Natrium-di(2-ethylhexyl)sulfosuccinat,
Diflufenican + Bayol + A11 + S1-9 + Natrium-di(2-ethylhexyl)sulfosuccinat,
Diflufenican + Bayol + A12 + S1-9 + Natrium-di(2-ethylhexyl)sulfosuccinat,
Diflufenican + Bayol + A13 + S1-9 + Natrium-di(2-ethylhexyl)sulfosuccinat,
Diflufenican + Bayol + A14 + S1-9 + Natrium-di(2-ethylhexyl)sulfosuccinat,
Diflufenican + Bayol + A1 + S2-1 + Natrium-di(2-ethylhexyl)sulfosuccinat,
Diflufenican + Bayol + A2 + S2-1 + Natrium-di(2-ethylhexyl)sulfosuccinat,
Diflufenican + Bayol + A3 + S2-1 + Natrium-di(2-ethylhexyl)sulfosuccinat,
Diflufenican + Bayol + A4 + S2-1 + Natrium-di(2-ethylhexyl)sulfosuccinat,
Diflufenican + Bayol + A5 + S2-1 + Natrium-di(2-ethylhexyl)sulfosuccinat,
Diflufenican + Bayol + A6 + S2-1 + Natrium-di(2-ethylhexyl)sulfosuccinat,
Diflufenican + Bayol + A7 + S2-1 + Natrium-di(2-ethylhexyl)sulfosuccinat,
Diflufenican + Bayol + A8 + S2-1 + Natrium-di(2-ethylhexyl)sulfosuccinat,
Diflufenican + Bayol + A9 + S2-1 + Natrium-di(2-ethylhexyl)sulfosuccinat,
Diflufenican + Bayol + A10 + S2-1 + Natrium-di(2-ethylhexyl)sulfosuccinat,
Diflufenican + Bayol + A11 + S2-1 + Natrium-di(2-ethylhexyl)sulfosuccinat,
Diflufenican + Bayol + A12 + S2-1 + Natrium-di(2-ethylhexyl)sulfosuccinat,
Diflufenican + Bayol + A13 + S2-1 + Natrium-di(2-ethylhexyl)sulfosuccinat,
Diflufenican + Bayol + A14 + S2-1 + Natrium-di(2-ethylhexyl)sulfosuccinat;
Diflufenican + Bayol + A1 + S1-1 + Natrium-di(2-ethylhexyl)sulfosuccinat + Rapsölmethylester, Diflufenican + Bayol + A2 + S1-1 + Natrium-di(2-ethylhexyl)sulfosuccinat + Rapsölmethylester, Diflufenican + Bayol + A3 + S1-1 + Natrium-di(2-ethylhexyl)sulfosuccinat + Rapsölmethylester, Diflufenican + Bayol + A4 + S1-1 + Natrium-di(2-ethylhexyl)sulfosuccinat + Rapsölmethylester, Diflufenican + Bayol + A5 + S1-1 + Natrium-di(2-ethylhexyl)sulfosuccinat + Rapsölmethylester, Diflufenican + Bayol + A6 + S1-1 + Natrium-di(2-ethylhexyl)sulfosuccinat + Rapsölmethylester, Diflufenican + Bayol + A7 + S1-1 + Natrium-di(2-ethylhexyl)sulfosuccinat + Rapsölmethylester, Diflufenican + Bayol + A8 + S1-1 + Natrium-di(2-ethylhexyl)sulfosuccinat + Rapsölmethylester, Diflufenican + Bayol + A9 + S1-1 + Natrium-di(2-ethylhexyl)sulfosuccinat + Rapsölmethylester, Diflufenican + Bayol + A10 + S1-1 + Natrium-di(2-ethylhexyl)sulfosuccinat + Rapsölmethylester, Diflufenican + Bayol + A11 + S1-1 + Natrium-di(2-ethylhexyl)sulfosuccinat + Rapsölmethylester, Diflufenican + Bayol + A12 + S1-1 + Natrium-di(2-ethylhexyl)sulfosuccinat + Rapsölmethylester, Diflufenican + Bayol + A13 + S1-1 + Natrium-di(2-ethylhexyl)sulfosuccinat + Rapsölmethylester, Diflufenican + Bayol + A14 + S1-1 + Natrium-di(2-ethylhexyl)sulfosuccinat + Rapsölmethylester, Diflufenican + Bayol + A1 + S1-9 + Natrium-di(2-ethylhexyl)sulfosuccinat + Rapsölmethylester, Diflufenican + Bayol + A2 + S1-9 + Natrium-di(2-ethylhexyl)sulfosuccinat + Rapsölmethylester, Diflufenican + Bayol + A3 + S1-9 + Natrium-di(2-ethylhexyl)sulfosuccinat + Rapsölmethylester, Diflufenican + Bayol + A4 + S1-9 + Natrium-di(2-ethylhexyl)sulfosuccinat + Rapsölmethylester, Diflufenican + Bayol + A5 + S1-9 + Natrium-di(2-ethylhexyl)sulfosuccinat + Rapsölmethylester, Diflufenican + Bayol + A6 + S1-9 + Natrium-di(2-ethylhexyl)sulfosuccinat + Rapsölmethylester, Diflufenican + Bayol + A7 + S1-9 + Natrium-di(2-ethylhexyl)sulfosuccinat + Rapsölmethylester, Diflufenican + Bayol + A8 + S1-9 + Natrium-di(2-ethylhexyl)sulfosuccinat + Rapsölmethylester, Diflufenican + Bayol + A9 + S1-9 + Natrium-di(2-ethylhexyl)sulfosuccinat + Rapsölmethylester, Diflufenican + Bayol + A10 + S1-9 + Natrium-di(2-ethylhexyl)sulfosuccinat + Rapsölmethylester, Diflufenican + Bayol + A11 + S1-9 + Natrium-di(2-ethylhexyl)sulfosuccinat + Rapsölmethylester, Diflufenican + Bayol + A12 + S1-9 + Natrium-di(2-ethylhexyl)sulfosuccinat + Rapsölmethylester, Diflufenican + Bayol + A13 + S1-9 + Natrium-di(2-ethylhexyl)sulfosuccinat + Rapsölmethylester, Diflufenican + Bayol + A14 + S1-9 + Natrium-di(2-ethylhexyl)sulfosuccinat + Rapsölmethylester, Diflufenican + Bayol + A1 + S2-1 + Natrium-di(2-ethylhexyl)sulfosuccinat + Rapsölmethylester, Diflufenican + Bayol + A2 + S2-1 + Natrium-di(2-ethylhexyl)sulfosuccinat + Rapsölmethylester, Diflufenican + Bayol + A3 + S2-1 + Natrium-di(2-ethylhexyl)sulfosuccinat + Rapsölmethylester, Diflufenican + Bayol + A4 + S2-1 + Natrium-di(2-ethylhexyl)sulfosuccinat + Rapsölmethylester, Diflufenican + Bayol + A5 + S2-1 + Natrium-di(2-ethylhexyl)sulfosuccinat + Rapsölmethylester, Diflufenican + Bayol + A6 + S2-1 + Natrium-di(2-ethylhexyl)sulfosuccinat + Rapsölmethylester, Diflufenican + Bayol + A7 + S2-1 + Natrium-di(2-ethylhexyl)sulfosuccinat + Rapsölmethylester, Diflufenican + Bayol + A8 + S2-1 + Natrium-di(2-ethylhexyl)sulfosuccinat + Rapsölmethylester, Diflufenican + Bayol + A9 + S2-1 + Natrium-di(2-ethylhexyl)sulfosuccinat + Rapsölmethylester, Diflufenican + Bayol + A10 + S2-1 + Natrium-di(2-ethylhexyl)sulfosuccinat + Rapsölmethylester, Diflufenican + Bayol + A11 + S2-1 + Natrium-di(2-ethylhexyl)sulfosuccinat + Rapsölmethylester, Diflufenican + Bayol + A12 + S2-1 + Natrium-di(2-ethylhexyl)sulfosuccinat + Rapsölmethylester, Diflufenican + Bayol + A13 + S2-1 + Natrium-di(2-ethylhexyl)sulfosuccinat + Rapsölmethylester, Diflufenican + Bayol + A14 + S2-1 + Natrium-di(2-ethylhexyl)sulfosuccinat + Rapsölmethylester.

In den vorgenannten Kombinationen können auch mehrere Sulfonamide als Komponente c) miteinander kombiniert und gemeinsam zur Bekämpfung von Schadpflanzen in Pflanzenkulturen eingesetzt werden. So können in einer bevorzugten Ausführungsform als Komponente c) z.B. verschiedene Sulfonamide der Formel (I) und/oder deren Salze miteinander kombiniert werden, z.B.
Mesosulfuron-methyl + lodosulfuron-methyl,
Mesosulfuron-methyl + lodosulfuron-methyl-Natrium,
Mesosulfuron-methyl + Foramsulfuron,
Mesosulfuron-methyl + Foramsulfuron-Natrium,
Mesosulfuron-methyl-Natrium + lodosulfuron-methyl,
Mesosulfuron-methyl-Natrium + lodosulfuron-methyl-Natrium,
Mesosulfuron-methyl-Natrium + Foramsulfuron,
Mesosulfuron-methyl-Natrium + Foramsulfuron-Natrium,
Foramsulfuron + lodosulfuron-methyl,
Foramsulfuron + lodosulfuron-methyl-Natrium,
Foramsulfuron-Natrium + lodosulfuron-methyl,
Foramsulfuron-Natrium + lodosulfuron-methyl-Natrium,
Amidosulfuron + lodosulfuron-methyl,
Amidosulfuron + lodosulfuron-methyl-Natrium,
Amidosulfuron-Natrium + lodosulfuron-methyl,
Amidosulfuron-Natrium + lodosulfuron-methyl-Natrium,
Ethoxysulfuron + lodosulfuron-methyl,
Ethoxysulfuron + lodosulfuron-methyl-Natrium,
Ethoxysulfuron-Natrium + lodosulfuron-methyl,
Ethoxysulfuron-Natrium + lodosulfuron-methyl-Natrium,
Propoxycarbazone + Mesosulfuron-methyl,
Propoxycarbazone + Mesosulfuron-methyl-Natrium,
Propoxycarbazone-Natrium + Mesosulfuron-methyl
Propoxycarbazone-Natrium + Mesosulfuron-methyl-Natrium
Propoxycarbazone + lodosulfuron-methyl,
Propoxycarbazone + lodosulfuron-methyl-Natrium,
Propoxycarbazone-Natrium + lodosulfuron-methyl,
Propoxycarbazone-Natrium + lodosulfuron-methyl-Natrium,
Flucarbazone + Mesosulfuron-methyl,
Flucarbazone + Mesosulfuron-methyl-Natrium,
Flucarbazone -Natrium + Mesosulfuron-methyl
Flucarbazone -Natrium + Mesosulfuron-methyl-Natrium
Flucarbazone + lodosulfuron-methyl,
Flucarbazone + lodosulfuron-methyl-Natrium,
Flucarbazone -Natrium + lodosulfuron-methyl,
Flucarbazone -Natrium + lodosulfuron-methyl-Natrium.

Die ALS-Inhibitoren c) und deren Mischungen, z.B. die vorgenannten Wirkstoffmischungen von Sulfonamiden der Formel (I) und/oder deren Salze, können mit einem oder mehreren Safenern kombiniert werden, insbesondere mit den Safenern Mefenpyr-diethyl (S1-1), Isoxadifen-ethyl (S1-9) und Cloquintocet-mexyl (S2-1).

Die erfindungsgemäßen Ölsuspensionskonzentrate können durch bekannte Verfahren, z.B. durch Vermischen der Komponenten hergestellt werden. So kann z.B. die Komponente b) (Kohlenwasserstoff) vorgelegt und die weiteren Komponenten a), d), c), e), f) und/oder g) zugegeben werden. Vor Zugabe der übrigen Komponenten kann die Komponente b) gegebenenfalls auch mit einem Verdicker vermischt werden. Die erhaltene Ölsuspension kann anschließend, gegebenenfalls nach einer Vorvermahlung, einer Feinvermahlung unterzogen werden.

Zur Herstellung der Mischungen können gängige Mischapparate verwendet werden, die gegebenenfalls temperiert werden. Zur Vorvermahlung können z.B. Hochdruckhomogenisatoren oder nach dem Rotor-Stator Prinzip arbeitende Mühlen verwendet werden, wie Ultraturax-Homogenisatoren, z.B. der Fa. IKA, oder Zahnkolloidmühlen, z.B. der Fa. Puck. Für die Feinvermahlung können z.B. diskontinuierliche Perlmühlen, z.B. der Fa. Drais oder kontinuierliche Perlmühlen, der z.B. Fa. Bachofen verwendet werden. Je nach den Eigenschaften der eingesetzten Komponenten, sowie verfahrens- und sicherheitstechnsichen Anforderungen und aus wirtschaftlichen Gründen, kann das Herstellverfahren angepaßt und gegebenenfalls auf eine Vorvermahlung oder auch auf eine Feinvermahlung verzichtet werden.

Die zur Herstellung eingesetzten Komponenten a) bis g) können Wasser als Nebenbestandteil enthalten, welches sich in den erfindungsgemäßen Ölsuspensionskonzentraten wiederfindet. Die erfindungsgemäßen Ölsuspensionskonzentrate können daher geringe Mengen von Wasser enthalten, im allgemeinen von 0 bis 5 Gew.%.

Zur Anwendung können die erfindungsgemäßen Ölsuspensionskonzentrate gegebenenfalls in üblicher Weise, z.B. zu Emulsionen, Suspensionen, Suspoemulsionen oder Lösungen verdünnt werden, z.B. mittels Wasser. Es kann vorteilhaft sein, erhaltenen Spritzbrühen weitere agrochemische Wirkstoffe (z.B. Tankmischpartner in Form entsprechender Formulierungen) und/oder zur Anwendung übliche Hilfs- und Zusatzstoffe, z.B. selbstemulgierende Öle wie Pflanzenöle oder Paraffinöle und/oder Düngemittel zuzugeben. Gegenstand der vorliegenden Erfindung sind daher auch solche flüssigen herbiziden Mittel, erhältlich durch Verdünnen der erfindungsgemäßen Ölsuspensionskonzentrate.

Die erfindungsgemäßen herbiziden Mittel (im nachfolgenden stets auch die erfindungsgemäßen Ölsuspensionskonzentrate umfassend) weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden gut erfaßt. Dabei können die Mittel z.B. im Vorsaat-, Vorauflauf- oder Nachauflaufverfahren ausgebracht werden. Im einzelnen seien beispielhaft einige Vertreter der mono- und dikotylen Unkrautflora genannt, die durch die erfindungsgemäßen herbiziden Mittel kontrolliert werden können, ohne daß durch die Nennung eine Beschränkung auf bestimmte Arten erfolgen soll.

Auf der Seite der monokotylen Unkrautarten werden z.B. Apera spica venti, Avena spp., Alopecurus spp., Brachiaria spp., Digitaria spp., Lolium spp., Echinochloa spp., Panicum spp., Phalaris spp., Poa spp., Setaria spp. sowie Bromus spp. wie Bromus catharticus, Bromus secalinus, Bromus erectus, Bromus tectorum und Bromus japonicus und Cyperusarten aus der annuellen Gruppe und auf seiten der perennierenden Spezies Agropyron, Cynodon, Imperata sowie Sorghum und auch ausdauernde Cyperusarten gut erfaßt.

Bei dikotylen Unkrautarten erstreckt sich das Wirkungsspektrum auf Arten wie z.B. Abutilon spp., Amaranthus spp., Chenopodium spp., Chrysanthemum spp., Galium spp. wie Galium aparine, Ipomoea spp., Kochia spp., Lamium spp., Matricaria spp., Pharbitis spp., Polygonum spp.,Sida spp., Sinapis spp., Solanum spp., Stellaria spp., Veronica spp. und Viola spp., Xanthium spp., auf der annuellen Seite sowie Convolvulus, Cirsium, Rumex und Artemisia bei den perennierenden Unkräutern.

Unter den spezifischen Kulturbedingungen im Reis vorkommende Schadpflanzen wie z.B. Echinochloa, Sagittaria, Alisma, Eleocharis, Scirpus und Cyperus werden von den erfindungsgemäßen Mitteln ebenfalls hervorragend bekämpft.

Werden die erfindungsgemäßen herbiziden Mittel vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der erfindungsgemäßen herbiziden Mittel auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so daß auf diese Weise eine für die Kulturpflanzen schädliche Unkrautkonkurrenz sehr früh und nachhaltig beseitigt wird.

Die erfindungsgemäßen herbiziden Mittel zeichnen sich durch eine schnell einsetzende und lang andauernde herbizide Wirkung aus. Die Regenfestigkeit der Wirkstoffe in den erfindungsgemäßen herbiziden Mitteln ist in der Regel günstig. Als besonderer Vorteil fällt ins Gewicht, daß die in den herbizide Mitteln verwendeten und wirksamen Dosierungen von herbiziden Verbindungen so gering eingestellt werden können, daß ihre Bodenwirkung optimal niedrig ist. Somit wird deren Einsatz nicht nur in empfindlichen Kulturen erst möglich, sondern Grundwasser-Kontaminationen werden praktisch vermieden. Durch die erfindungsgemäßen Kombination von Wirkstoffen wird eine erhebliche Reduzierung der nötigen Aufwandmenge der Wirkstoffe ermöglicht.

Die genannten Eigenschaften und Vorteile sind in der praktischen Unkrautbekämpfung von Nutzen, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Mittel hinsichtlich der beschriebenen Eigenschaften deutlich übertroffen.

Obgleich die erfindungsgemäßen herbiziden Mittel eine ausgezeichnete herbizide Aktivität gegenüber mono- und dikotylen Unkräutern aufweisen, werden Kulturpflanzen wirtschaftlich bedeutender Kulturen z.B. zweikeimblättriger Kulturen wie Soja, Baumwolle, Raps, Zuckerrüben, oder Gramineen-Kulturen wie Weizen, Gerste, Roggen, Hafer, Hirse, Reis oder Mais, nur unwesentlich oder gar nicht geschädigt. Die vorliegenden Verbindungen eignen sich aus diesen Gründen sehr gut zur selektiven Bekämpfung von unerwünschtem Pflanzenwuchs in landwirtschaftlichen Nutzpflanzungen oder in Zierpflanzungen.

Darüber hinaus weisen die erfindungsgemäßen herbiziden Mittel hervorragende wachstumsregulatorische Eigenschaften bei Kulturpflanzen auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Desweiteren eignen sie sich auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die erfindungsgemäßen herbiziden Mittel auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt.

Bevorzugt ist die Anwendung der erfindungsgemäßen Mittel in wirtschaftlich bedeutenden transgenen Kulturen von Nutz- und Zierpflanzen, z. B. von Gramineen-Kulturen wie Weizen, Gerste, Roggen, Hafer, Hirse, Reis und Mais oder auch Kulturen von Zuckerrübe, Baumwolle, Soja, Raps, Kartoffel, Tomate, Erbse und anderen Gemüsesorten. Vorzugsweise können die erfindungsgemäßen Mittel als Herbizide in Nutzpflanzenkulturen eingesetzt werden, welche gegenüber den phytotoxischen Wirkungen der Herbizide resistent sind bzw. gentechnisch resistent gemacht worden sind.

Bei der Anwendung der erfindungsgemäßen herbiziden Mittel in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den Herbiziden, gegenüber denen die transgene Kultur resistent ist, sowie Beeinflussung von Wuchs und Ertrag der transgenen Kulturpflanzen.

Gegenstand der vorliegenden Erfindung ist weiterhin auch ein Verfahren zur Bekämpfung von unerwünschtem Pflanzenwuchs (z.B. Schadpflanzen wie monokotyle oder dikotyle Unkräuter oder unerwünschte Kulturpflanzen), vorzugsweise in Pflanzenkulturen wie Getreide (z.B. Weizen, Gerste, Roggen, Hafer, Reis, Mais, Hirse), Zuckerrübe, Zuckerrohr, Raps, Baumwolle und Soja, besonders bevorzugt in monokotylen Kulturen wie Getreide, z.B. Weizen, Gerste, Roggen, Hafer, Kreuzungen davon wie Triticale, Reis, Mais und Hirse, wobei ein oder mehrere erfindungsgemäße herbizide Mittel auf die Pflanzen (z.B. Schadpflanzen), Pflanzenteile, das Saatgut (z.B. Pflanzensamen) oder die Fläche auf der die Pflanzen wachsen (z.B. die Anbaufläche) appliziert werden.

Die Pflanzenkulturen können auch gentechnisch verändert oder durch Mutationsselektion erhalten sein und sind bevorzugt tolerant gegenüber Acetolactatsynthase (ALS)-Inhibitoren.

Das Ölsuspensionskonzentrat der vorliegenden Erfindung weist eine ausgezeichnete chemische Stabilität während der Herstellung und Lagerung auf und eignet sich insbesondere auch für Kombinationen von Wirkstoffen mit unterschiedlichen physikalisch-chemischen Eigenschaften. Außerdem weist das Ölsuspensionskonzentrat eine ausgezeichnete physikalische Stabilität, eine gute Applizierbarkeit und Anwenderfreundlichkeit, sowie eine hohe biologische Effektivität und Selektivität auf.

Das nachfolgende Beispiel soll die Erfindung erläutern, ohne limitierenden Charakter zu haben.

### Beispiel

In einer Vorlage wurden 33,3 g Bayol^{®} 82 vorgelegt und 1,8 g Bentone^{®} 34 zugesetzt. Nach Mischen mit einem Ultra-Turax^{®} wurden 0,2 g Propylencarbonat zugesetzt und mit dem Ultra-Turax^{®} bei hoher Scherkräften zur Gelierung gebracht. Danach wurden 6 g Edenor^{®} MESU zugesetzt und wiederum mit hohen Scherkräften eingearbeitet. Anschließend wurden 19 g Triton^{®} GR7ME und 5 g Emulsogen^{®} EL400 zugesetzt und wiederum mit dem Ultra-Turax^{®} eingearbeitet. Danach wurden 19,54 g Genapol^{®} X 060 Methylether und anschließend vorvermahlenes Diflufenican unter Mischen mit dem Ultra-Turax^{®} portionsweise zugesetzt, bis es völlig eingearbeitet war. Es wurde ein Ölsuspensionskonzentrat erhalten, welches anschließend über eine Dynomill^{®}-Mühle mit einer Drehzahl von ca. 3000 U/min und einer Austrittstemperatur von 25 - 30°C gefahren wurde. Nach der Vermahlung wurde das Ölsuspensionskonzentrat 20 Minuten nachgerührt und dann abgefüllt.

Erläuterung:
- Bentone^{®} 34: = modifiziertes Schichtsilikat, Elementis
- Edenor^{®} MESU: = Rapsölmethylester, Cognis
- Emulsogen^{®} EL-400: = polyethoxyliertes Rizinusöl mit 40 Einheiten Ethylenoxid, Clariant
- Triton^{®} GR-7M E: = Di(2-Ethylhexyl)sulfosuccinat Natriumsalz in aromatischem Lösungsmittel, Dow Chemicals
- Bayol^{®} 82: = Paraffinöl (Exxon)
- Genapol^{®} X060 Methylether =: Isotridecylalkohol mit 6 Einheiten Ethylenoxid, Methyl-endverschlossen (Clariant)

## Patentansprüche

1. Ölsuspensionsltonzentrat, enthaltend Verdickungs- und Thixotropiermittel sowie
a) den herbiziden Wirkstoff Diflufenican,
b) ein oder mehrere Lösungsmittel aus der Gruppe der aliphatischen Kohlenwasserstoffe, und
f) ein oder mehrere Sulfosuccinate aus der Gruppe der Mono- und Diester der Sulfobernsteinsäure.

2. Ölsuspensionskonzentrat gemäß Anspruch 1, worin als Komponente b) enthalten sind, ein oder mehrere Lösungsmittel aus der Gruppe der gesättigten aliphatischen Kohlenwasserstoffe.

3. Ölsuspensionskonzentrat gemäß Anspruch 1 oder 2, zusätzlich enthaltend
c) ein oder mehrere herbizide Wirkstoffe aus der Gruppe der ALS-Inhibitoren,
d) ein oder mehrere Safener,
e) einen oder mehrere von a), c) und d) verschiedene agrochemische Wirkstoffe, und/oder
g) übliche Hilfs- und Zusatzstoffe.

4. Ölsuspensionskonzentrat gemäß einem oder mehreren der Ansprüche 1 bis 3, worin als Komponente c) enthalten sind, ein oder mehrere herbizide Wirkstoffe aus der Gruppe der Sulfonamide, vorzugsweise aus der Gruppe der Triazolopyrimidinsulfonamide, Sulfonylaminocarbonyltriazolinone und Sulfonylharnstoffe.

5. Ölsuspensionskonzentrat gemäß einem oder mehreren der Ansprüche 1 bis 4, worin als Komponente d) enthalten sind, ein oder mehrere Safener aus der Gruppe Dichlorphenylpyrazolin-3-carbonsäure und ihre Ester, 5,5 -Diphenyl-2-isoxazolin-3-carbonsäure ihre Ester und 8-Chinolinoxyessigsäure und ihre Ester.

6. Ölsuspensionskonzentrat gemäß einem oder mehreren der Ansprüche 1 bis 5, worin als eine Komponente g) ein oder mehrere Fettsäureester enthalten sind.

7. Verfahren zur Herstellung eines Ölsuspensionskonzentrats gemäß einem oder mehreren der Ansprüche 1 bis 6, worin die Komponenten gemischt und gegebenenfalls vermahlt werden.

8. Verfahren zur Bekämpfung von unerwünschtem Pflanzenwuchs, worin eine wirksame Menge eines Ölsuspensionskonzentrats gemäß einem oder mehreren der Ansprüche 1 bis 6 auf die Pflanzen, Teile der Pflanzen, das Saatgut oder die Fläche auf der Pflanzen wachsen, appliziert wird.

9. Verwendung eines Ölsuspensionskonzentrats gemäß einem oder mehreren der Ansprüche 1 bis 6, zur Bekämpfung von unerwünschtem Pflanzenwuchs.

10. Verwendung eines Ölsuspensionskonzentrats gemäß einem oder mehreren der Ansprüche 1 bis 6, zur Herstellung eines herbiziden Mittels.

11. Verwendung gemäß Anspruch 10, worin das herbizide Mittel eine Emulsion, Suspension, Suspoemulsion oder Lösung ist.

12. Flüssiges herbizides Mittel, erhältlich durch Verdünnen eines Ölsuspensionskonzentrats gemäß einem oder mehreren der Ansprüche 1 bis 6.

13. Flüssiges herbizides Mittel gemäß Anspruch 12, worin das herbizide Mittel eine Emulsion, Suspension, Suspoemulsion oder Lösung ist.

14. Flüssiges herbizides Mittel, enthaltend Verdickungs- und Thixotropiermittel, sowie
a) den herbiziden Wirkstoff Diflufenican, und
b) ein oder mehrere Lösungsmittel aus der Gruppe der aliphatischen Kohlenwasserstoffe, und
f) ein oder mehrere Sulfosuccinate aus der Gruppe der Mono- und Diester der Sulfobernsteinsäure.

15. Flüssiges herbizides Mittel gemäß Anspruch 14, zusätzlich enthaltend c) ein oder mehrere herbizide Wirkstoffe aus der Gruppe der ALS-Inhibitoren,
d) ein oder mehrere Safener,
e) einen oder mehrere von a), c) und d) verschiedene agrochemische Wirkstoffe, und/oder
g) übliche Hilfs- und Zusatzstoffe.

16. Flüssiges herbizides Mittel gemäß Anspruch 14 oder 15, zusätzlich enthaltend Wasser.

17. Verfahren zur Bekämpfung von unerwünschtem Pflanzenwuchs, worin eine wirksame Menge eines herbiziden Mittels gemäß einem oder mehreren der Ansprüche 12 bis 16 auf die Pflanzen, Teile der Pflanzen, das Saatgut oder die Fläche auf der Pflanzen wachsen, appliziert wird.

18. Verwendung eines herbiziden Mittels gemäß einem oder mehreren der Ansprüche 12 bis 16, zur Bekämpfung von unerwünschtem Pflanzenwuchs.

## Claims

1. Oil suspension concentrate, comprising thickeners and thixotropic agents, and
a) the herbicidally active compound diflufenican,
b) one or more solvents from the group of the aliphatic hydrocarbons, and
f) one or more sulfosuccinates from the group of the mono- and diesters of sulfosuccinic acid.

2. Oil suspension concentrate according to Claim 1 which comprises, as component b), one or more solvents from the group of the saturated aliphatic hydrocarbons.

3. Oil suspension concentrate according to Claim 1 or 2, which additionally comprises
c) one or more herbicidally active compounds from the group of the ALS inhibitors,
d) one or more safeners,
e) one or more agrochemically active compounds different from a), c) and d), and/or
g) customary auxiliaries and additives.

4. Oil suspension concentrate according to one or more of Claims 1 to 3 which comprises, as component c), one or more herbicidally active compounds from the group of the sulfonamides, preferably from the group of the triazolopyrimidinesulfonamides, sulfonylaminocarbonyltriazolinones and sulfonylureas.

5. Oil suspension concentrate according to one or more of Claims 1 to 4 which comprises, as component d), one or more safeners from the group of dichlorophenylpyrazoline-3-carboxylic acid and its esters, 5,5-diphenyl-2-isoxazoline-3-carboxylic acid and its esters and 8-quinolineoxyacetic acid and its esters.

6. Oil suspension concentrate according to one or more of Claims 1 to 5 which comprises, as a component g), one or more fatty acid esters.

7. Process for preparing an oil suspension concentrate according to one or more of Claims 1 to 6, which comprises mixing and, if appropriate, grinding the components.

8. Method for controlling harmful plants, which comprises applying an effective amount of an oil suspension concentrate according to one or more of Claims 1 to 6 to the harmful plants, to parts of the plants, to seeds of the plants, to the area on which the plants grow.

9. Use of an oil suspension concentrate according to one or more of Claims 1 to 6 for controlling harmful plants.

10. Use of an oil suspension concentrate according to one or more of Claims 1 to 6 for preparing a herbicidal composition.

11. Use according to Claim 10 wherein the herbicidal composition is an emulsion, a suspension, a suspoemulsion or a solution.

12. Liquid herbicidal composition, obtainable by diluting an oil suspension concentrate according to one or more of Claims 1 to 6.

13. Liquid herbicidal composition according to Claim 12 wherein the herbicidal composition is an emulsion, a suspension, a suspoemulsion or a solution.

14. Liquid herbicidal composition, comprising thickeners and thixotropic agents, and
a) the herbicidally active compound diflufenican, and
b) one or more solvents from the group of the aliphatic hydrocarbons, and
f) one or more sulfosuccinates from the group of the mono- and diesters of sulfosuccinic acid.

15. Liquid herbicidal composition according to Claim 14, which additionally comprises
c) one or more herbicidally active compounds from the group of the ALS inhibitors,
d) one or more safeners,
e) one or more agrochemically active compounds different from a), c) and d), and/or
f) customary auxiliaries and additives.

16. Liquid herbicidal composition according to Claim 14 or 15, which additionally comprises water.

17. Method for controlling harmful plants, which comprises applying an effective amount of the herbicidal composition according to one or more of Claims 12 to 16 to the harmful plants, to parts of the plants, to seeds of the plants, to the area on which the plants grow.

18. Use of a herbicidal composition according to one or more of Claims 12 to 16 for controlling harmful plants.

## Revendications

1. Concentré de suspension huileuse, contenant des agents épaississants et thixotropiques, ainsi que
a) l'agent actif herbicide diflufénican,
b) un ou plusieurs solvants du groupe des hydrocarbures aliphatiques, et
f) un ou plusieurs sulfosuccinates du groupe des mono- et diesters de l'acide sulfosuccinique.

2. Concentré de suspension huileuse selon la revendication 1, dans lequel un ou plusieurs solvants du groupe des hydrocarbures aliphatiques saturés sont contenus en tant que composant b).

3. Concentré de suspension huileuse selon la revendication 1 ou 2, contenant en outre
c) un ou plusieurs agents actifs herbicides du groupe des inhibiteurs d'ALS,
d) un ou plusieurs agents protecteurs,
e) un ou plusieurs agents actifs agrochimiques différents de a), c) et d), et/ou
g) des adjuvants et additifs usuels.

4. Concentré de suspension huileuse selon une ou plusieurs des revendications 1 à 3, dans lequel un ou plusieurs agents actifs herbicides du groupe des sulfonamides, de préférence du groupe des triazolopyrimidine-sulfonamides, des sulfonylaminocarbonyltriazolinones et des sulfonylurées sont contenus en tant que composant c).

5. Concentré de suspension huileuse selon une ou plusieurs des revendications 1 à 4, dans lequel un ou plusieurs agents protecteurs du groupe constitué par l'acide dichlorophénylpyrazoline-3-carboxylique et ses esters, l'acide 5,5-diphényl-2-isoxazoline-3-carboxylique et ses esters, et l'acide 8-quinolinoxyacétique et ses esters sont contenus en tant que composant d).

6. Concentré de suspension huileuse selon une ou plusieurs des revendications 1 à 5, dans lequel un ou plusieurs esters d'acides gras sont contenus en tant que composant g).

7. Procédé de fabrication d'un concentré de suspension huileuse selon une ou plusieurs des revendications 1 à 6, selon lequel les composants sont mélangés et éventuellement broyés.

8. Procédé de lutte contre une végétation indésirable, selon lequel une quantité efficace d'un concentré de suspension huileuse selon une ou plusieurs des revendications 1 à 6 est appliquée sur les plantes, des parties des plantes, les graines ou la surface sur laquelle les plantes poussent.

9. Utilisation d'un concentré de suspension huileuse selon une ou plusieurs des revendications 1 à 6 pour lutter contre une végétation indésirable.

10. Utilisation d'un concentré de suspension huileuse selon une ou plusieurs des revendications 1 à 6 pour la fabrication d'un agent herbicide.

11. Utilisation selon la revendication 10, dans laquelle l'agent herbicide est une émulsion, une suspension, une suspo-émulsion ou une solution.

12. Agent herbicide liquide, pouvant être obtenu par dilution d'un concentré de suspension huileuse selon une ou plusieurs des revendications 1 à 6.

13. Agent herbicide liquide selon la revendication 12, dans lequel l'agent herbicide est une émulsion, une suspension, une suspo-émulsion ou une solution.

14. Agent herbicide liquide, contenant des agents épaississants et thixotropiques, ainsi que
a) l'agent actif herbicide diflufénican,
b) un ou plusieurs solvants du groupe des hydrocarbures aliphatiques, et
f) un ou plusieurs sulfosuccinates du groupe des mono- et diesters de l'acide sulfosuccinique.

15. Agent herbicide liquide selon la revendication 14, contenant en outre
c) un ou plusieurs agents actifs herbicides du groupe des inhibiteurs d'ALS,
d) un ou plusieurs agents protecteurs,
e) un ou plusieurs agents actifs agrochimiques différents de a), c) et d), et/ou
g) des adjuvants et additifs usuels.

16. Agent herbicide liquide selon la revendication 14 ou 15, contenant en outre de l'eau.

17. Procédé de lutte contre une végétation indésirable, selon lequel une quantité efficace d'un agent herbicide selon une ou plusieurs des revendications 12 à 16 est appliquée sur les plantes, des parties des plantes, les graines ou la surface sur laquelle les plantes poussent.

18. Utilisation d'un agent herbicide selon une ou plusieurs des revendications 12 à 16 pour lutter contre une végétation indésirable.
